(19) Europäisches Patentamt
European Patent Office
Office européen des brevets

(11) Veröffentlichungsnummer: **0 116 958**
B1

# (12) EUROPÄISCHE PATENTSCHRIFT

(45) Veröffentlichungstag der Patentschrift: **01.04.87**

(51) Int. Cl.[4]: **C 09 B 67/26,** C 09 B 62/503

(21) Anmeldenummer: **84101600.9**

(22) Anmeldetag: **16.02.84**

(54) **Stabile wässrige Flüssigpräparationen von faserreaktiven Farbstoffen mit beta-Sulfatoethylsulfonyl-Gruppen.**

(30) Priorität: **22.02.83 US 468513**

(43) Veröffentlichungstag der Anmeldung: **29.08.84 Patentblatt 84/35**

(45) Bekanntmachung des Hinweises auf die Patenterteilung: **01.04.87 Patentblatt 87/14**

(84) Benannte Vertragsstaaten: **CH DE FR GB IT LI**

(56) Entgegenhaltungen:
**EP - A - 0 057 789**
**EP - A - 0 092 119**
**DE - A - 2 843 015**
**FR - A - 2 267 352**

(73) Patentinhaber: **AMERICAN HOECHST CORPORATION, Route 202-206 North, Somerville, N.J. 08876 (US)**

(72) Erfinder: **Corso, Anthony J., 5 Crocus Court, Coventry Rhode Island 02816 (US)**

(74) Vertreter: **Meyer-Dulheuer, Karl-Hermann, Dr. et al, HOECHST Aktiengesellschaft Zentrale Patentabteilung Postfach 80 03 20, D-6230 Frankfurt/Main 80 (DE)**

EP 0 116 958 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft wässrige, gegen Zersetzung stabile Präparationen von faserreaktiven Farbstoffen.

Aus verschiedenen Patentschriften sind flüssige Präparationen von faserreaktiven Farbstoffen bekannt. Erwähnenswert sind diesbezüglich insbesondere die US-Patentschriften Nrn. 4 072 463, 4 078 884, 4 118 184 und 4 149 850, die im wesentlichen wässrige Präparationen beschreiben, welche 5 bis 35 Gew.-% (45 Gew.-% in einem Beispiel) an dem faserreaktiven Farbstoff der allgemeinen Formel $(HO_3S)_m$–F–$Z_n$ (in welcher F den chromophoren Rest und Z die faserreaktive Gruppe bedeuten) und 1 bis 5 Gew.-% (oder 6 Gew.-%) an Puffersubstanzen enthalten und einen pH-Wert von 3 bis 7 besitzen. Als bevorzugter pH-Wert für die bekannten Flüssigpräparationen ist einer mit 5,5 bis 6,8 angegeben, und die meisten der Beispiele offenbaren gepufferte Flüssigpräparationen mit einem pH-Wert in diesem Bereich.

Weiterhin sind in der US-Patentschrift 4 349 349 flüssige Präparationen des Farbstoffes C.I. Reactive Blue 19 offenbart, die 10 bis 50 Teile dieses Farbstoffes, 1 bis 40 Teile eines Formaldehyd/Naphthalinsulfonsäure-Kondensationsproduktes und 0,1 bis 10 Teile eines nichtionischen oberflächenaktiven Mittels enthalten. Alle Beispiele beschreiben Farbstoffpräparationen, die auf einen pH-Wert von 5,5 eingestellt sind, wobei die Präparation des Beispieles 1 auch Natriumacetat als Puffer enthält.

Wir haben nunmehr festgestellt, dass flüssige Präparationen von faserreaktiven Farbstoffen, die die faserreaktive β-Sulfatoethylsulfonyl-Gruppe (entsprechend der allgemeinen Formel $-SO_2-CH_2-CH_2-OSO_3M$, in welcher M ein Wasserstoffatom oder ein Alkalimetall, wie Natrium oder Kalium, bedeutet) enthalten, wenn sie in Übereinstimmung mit den bevorzugten Bedingungen der oben beschriebenen Patente hergestellt werden, Zersetzungen während langer Lagerung erleiden, und zwar deswegen, weil die β-Sulfatoethylsulfonyl-Gruppe der genannten Farbstoffe sich in die Vinylsulfonyl-Form zersetzen kann. Obgleich die Vinylsulfonyl-Form des Farbstoffes eine aktive Farbstofform darstellt und mit der Faser zu reagieren vermag, haben wir nunmehr festgestellt, dass es nachteilig ist, wenn merkliche Anteile des Farbstoffes in der Vinylsulfonyl-Form neben der β-Sulfatoethylsulfonyl-Form vor der eigentlichen färberischen Anwendung vorliegen.

Die Vinylsulfonyl-Form ist weniger löslich als die β-Sulfatoethylsulfonyl-Form; so kann der Farbstoff aus den flüssigen, insbesondere konzentrierten Lösungen (Präparationen) ausfallen in dem Masse, wie die Zersetzung zur Vinylsulfonyl-Form fortschreitet. Auf diese Weise wird die Farbstärke des Farbstoffes reduziert. Dies stellt insbesondere dann ein Problem dar, wenn der Farbstoff eine Monosulfonsäure-Verbindung ist oder wenn eine hochkonzentrierte Farbstofflösung erwünscht ist und vorliegen soll. In jedem Falle kann die flüssige Präparation eine Farbstoffkonzentration besitzen, die sehr nahe an dem Sättigungsgrad liegt, so dass jede Verschiebung zu der weniger löslichen Farbstofform nicht mehr tolerierbar ist.

Wir haben ebenso festgestellt, dass flüssige Farbstoffpräparationen, die durch Zersetzung bedeutende Anteile an dem Farbstoff in der Vinylsulfonyl-Form haben, ebenso unerwünscht in Bezug auf die nachfolgenden Färbeoperationen sind. Solche Präparationen können ungleichmässige und unegale Färbungen liefern oder wegen der vorzeitigen Fixierung der aktiven Vinylsulfonyl-Form auf der Faser zu unzureichenden Färbungen lediglich auf der Oberfläche des Fasermaterials führen. Auch bleibt überflüssiges Alkali in der Färbeflotte oder im Färbebad unverbraucht zurück, da mit dem Farbstoffprodukt eine geringere Menge an der Sulfatoverbindung eingesetzt wurde als berechnet und theoretisch benötigt wurde. Dieser Alkaliüberschuss kann zu einer Umkehrung des Färbeprozesses infolge Hydrolyse (Spaltung) der Farbstoff-Faser-Bindung führen.

Mit der vorliegenden Erfindung wurden nunmehr wässrige, flüssige Präparationen von faserreaktiven Farbstoffen gefunden, die beständig gegen Zersetzung, insbesondere bezüglich der Bildung zur Vinylsulfonyl-Form, sind. Die erfindungsgemässen Präparationen bestehen im wesentlichen aus 5 bis 45 Gew.-% eines wasserlöslichen, faserreaktiven Farbstoffes mit 1 bis 3 β-Sulfatoethylsulfonyl-Gruppen der oben definierten Formel $-SO_2-CH_2-CH_2-OSO_3M$, oder aus einer Mischung solcher Farbstoffe, sowie aus 0 bis 10 Gew.-% eines wasserlöslichen, inerten anorganischen Salzes und 45 bis 95 Gew.-% Wasser; sie besitzen einen pH-Wert zwischen etwa 2,5 und etwa 4,5 und sind frei von Puffersubstanzen. Die erfindungsgemässen Flüssigpräparationen können für lange Zeit, beispielsweise mehr als 30 Tage, bei einer Temperatur zwischen 0 und 50 °C bei deutlich reduzierter Zersetzung in die Vinylsulfonyl-Form aufbewahrt und gelagert werden.

Die in den erfindungsgemässen Präparationen verwendeten oder verwendbaren Farbstoffe sind zahlreich in der Literatur bekannt; so werden solche Farbstoffe beispielsweise in den US-Patentschriften Nrn. 4 072 463, 4 078 884, 4 008 441, 4 118 184, 4 149 850 und 4 271 072 beschrieben. Diesbezüglich können insbesondere solche in den erfindungsgemässen Präparationen geeignete faserreaktive Farbstoffe genannt werden, die der allgemeinen Formel (1)

$$(MO_3S)_k-F-(SO_2-CH_2-CH_2-OSO_3M)_r \qquad (1)$$

entsprechen, in welcher F der chromophore Rest eines Monoazo-, Disazo-, Anthrachinon- oder Phthalocyanin-Farbstoffes oder eines Kupfer-, Nickel-, Chrom- oder Kobaltkomplexes dieser Farbstoffe darstellt, k eine ganze Zahl von 1 bis 4 ist, r eine ganze Zahl von 1 bis 3 bedeutet und M für ein Wasserstoffatom oder für das Äquivalent eines Metalls, insbesondere eines Alkali- oder

Erdalkalimetalls, steht. Natürlich können diese Farbstoffe als jegliches wasserlösliches Metallsalz in den Färbepräparationen verwendet werden; bevorzugt verwendet man sie als Lithium-, Natrium- und Kaliumsalze.

Faserreaktive Farbstoffe, die besonders geeignet für die erfindungsgemässen Färbepräparationen sind, sind solche, die den nachfolgenden Formeln (A) bis (J) entsprechen; somit sind insbesondere solche flüssigen Färbepräparationen obengenannter Definition bevorzugt, die einen oder mehrere dieser Farbstoffe entsprechend den allgemeinen Formeln (A) bis (J) enthalten.

A

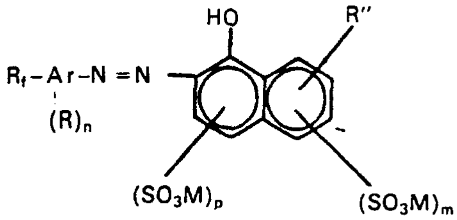

B

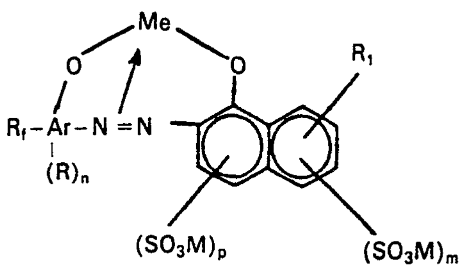

(C)

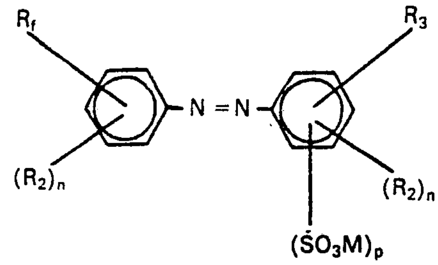

(D)

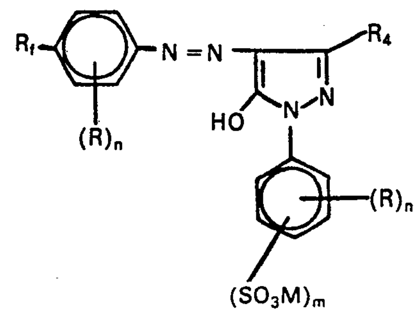

(E)

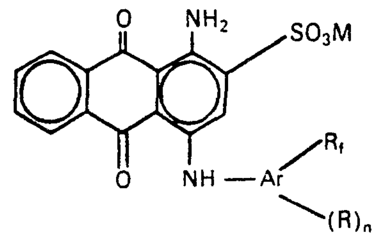

(F)

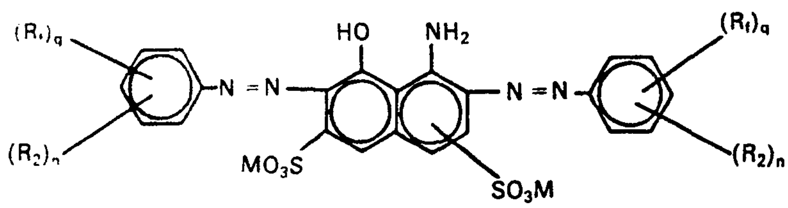

(G)

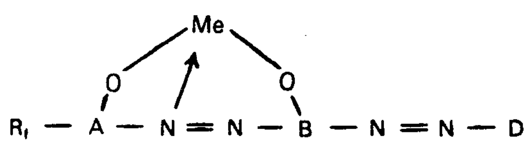

A

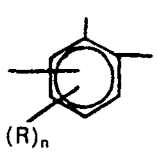

oder

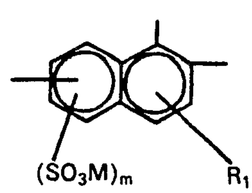

ist,

B

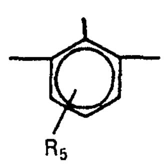

oder

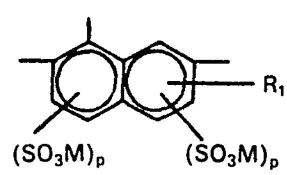

ist,

D 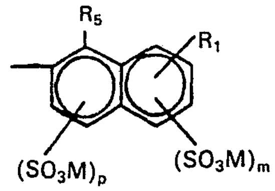 oder 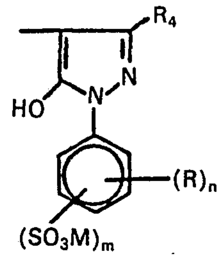 ist,

(H) 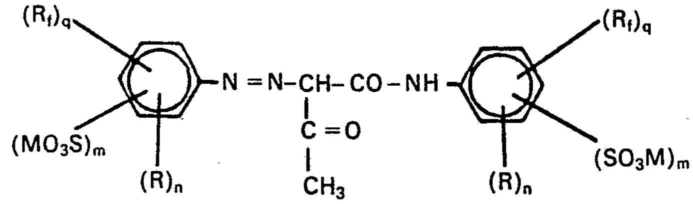

(J) 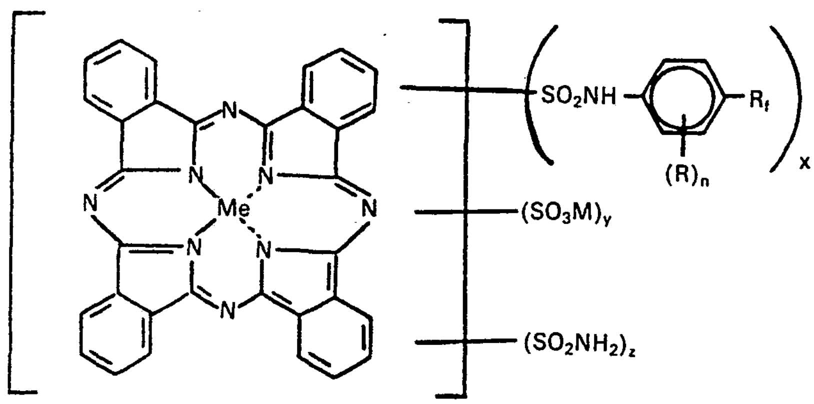

In diesen Formeln bedeuten:

M ist ein Wasserstoffatom oder ein Alkalimetall, wie Natrium, Kalium oder Lithium;

Ar ist ein Benzolkern oder ein Naphthalinkern oder ein Rest der Formel

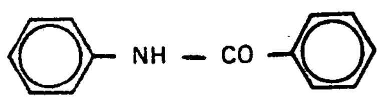

wobei die für Ar angegebenen Reste oder Substituenten getrennt an den Benzolkernen oder auch gleichzeitig an einen der Benzolkerne gebunden sein können;

$R_f$ ist eine Gruppe der Formel $-SO_2-CH_2-CH_2-OSO_3M$ mit M der obengenannten Bedeutung;

R ist jedes eine Alkylgruppe von 1 bis 4 C-Atomen, eine Alkoxygruppe von 1 bis 4 C-Atomen, ein Bromatom, ein Chloratom, eine Nitrogruppe, eine Trifluormethylgruppe, eine Alkylaminogruppe mit einem Alkylrest von 1 bis 4 C-Atomen, eine Carboxygruppe oder eine Sulfogruppe, wobei die R zueinander gleiche oder voneinander verschiedene Bedeutungen besitzen können;

R″ ist eine Aminogruppe, eine Alkylaminogruppe mit einem Alkylrest von 1 bis 4 C-Atomen, eine Alkanoylaminogruppe mit einem Alkylrest von 1 bis 4 C-Atomen, die Benzoylaminogruppe oder eine durch Chlor, Brom, Nitro, Trifluormethyl, Alkyl von 1 bis 4 C-Atomen und/oder Alkoxy von 1 bis 4 C-Atomen substituierte Benzoylaminogruppe;

$R_1$ ist eine Aminogruppe, eine Alkylaminogruppe mit einem Alkylrest von 1 bis 4 C-Atomen, eine Alkanoylaminogruppe mit einem Alkylrest von 1 bis 4 C-Atomen, die Benzoylaminogruppe oder eine durch Chlor, Brom, Nitro, Trifluormethyl, Alkyl von 1 bis 4 C-Atomen, und/oder Alkoxy von 1 bis 4 C-Atomen substituierte Benzoylaminogruppe;

$R_2$ ist eine Alkylgruppe von 1 bis 4 C-Atomen, eine Alkoxygruppe von 1 bis 4 C-Atomen, ein Bromatom, ein Chloratom, eine Nitrogruppe, eine Trifluormethylgruppe, eine Carboxygruppe, eine Sulfogruppe, eine Aminogruppe, eine Alkylaminogruppe mit einem Alkylrest von 1 bis 4 C-Atomen, eine Alkanoylaminogruppe mit einem Alkylrest von 1 bis 4 C-Atomen, eine Benzoylaminogruppe oder eine durch Chlor, Brom, Nitro, Trifluormethyl, Alkyl von 1 bis 4 C-Atomen und/oder Alkoxy von 1 bis 4 C-Atomen substituierte Benzoylaminogruppe, wobei die beiden $R_2$, falls n gleich 2 ist, jeweils zueinander gleiche oder voneinander verschiedene Bedeutungen besitzen können;

$R_3$ ist ein Wasserstoffatom oder ein Rest der Formel

$-NH-CH_2-CH_2-OH$, $-N(CH_2-CH_2-OH)_2$,
$-NH-CH_2-CH_2-O-CO-CH_3$,
$-N(CH_2-CH_2-O-CO-CH_3)_2$,
$-NH-CH_2-CH_2-OSO_3M$,
$-N(CH_2-CH_2-OSO_3M)_2$, $-NH-CH_2-CH_2-CN$
oder
$-N(CH_2-CH_2-CN)_2$,

wobei M die obengenannte Bedeutung besitzt;

$R_4$ ist eine Alkylgruppe von 1 bis 4 C-Atomen, eine Carboxygruppe, eine Carbalkoxygruppe von 1 bis 4 C-Atomen im Alkylrest oder eine Carbamoylgruppe;

$R_5$ ist ein Wasserstoffatom oder eine Hydroxygruppe;

Me ist ein Kupfer- oder Nickelatom oder das Äquivalent des Kobalt- oder Chromatoms;

m ist die Zahl Null, 1 oder 2;

n ist die Zahl Null, 1 oder 2;

p ist die Zahl Null oder 1;

q ist die Zahl Null oder 1 mit der Massgabe, dass zumindestens eines der Formelglieder q in der jeweiligen Strukturformel die Zahl 1 bedeutet;

x ist die Zahl 1 oder 2,

y ist die Zahl 1 oder 2 und

z ist die Zahl Null, 1 oder 2,

wobei die Summe von $(x + y + z)$ die Zahl 3 oder 4 ist, und wobei die obengenannten Formelglieder zueinander gleiche oder voneinander verschiedene Bedeutungen besitzen können.

Faserreaktive Farbstoffe, die insbesondere bevorzugt in den erfindungsgemässen flüssigen Präparationen verwendet werden können, sind solche der nachstehend genannten Formeln (I) bis (XXVI). Insbesondere bevorzugte flüssige Präparationen der oben definierten Zusammensetzung sind somit solche, die einen oder mehrere der nachstehend genannten Farbstoffe der allgemeinen Formeln (I) bis (XXVI) enthalten. In diesen Formeln besitzt M die obengenannte, insbesondere bevorzugte Bedeutung.

(I)

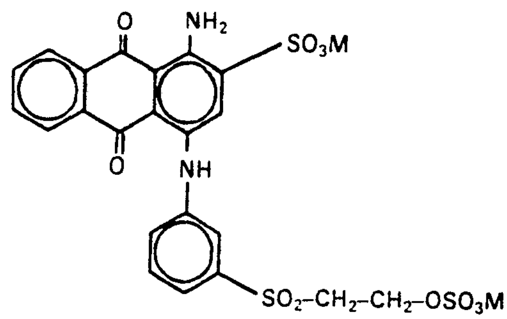

(II)

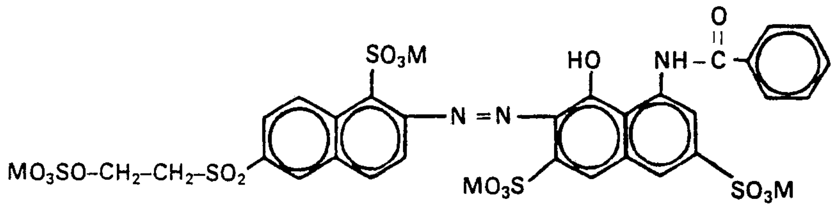

(III)

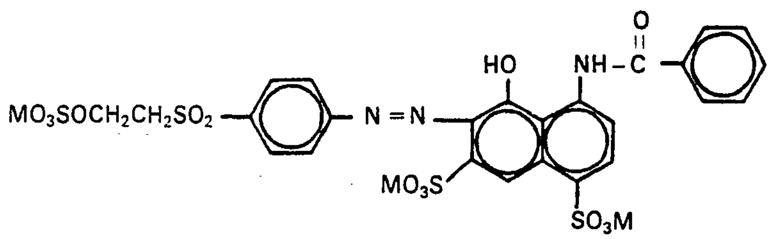

(IV)

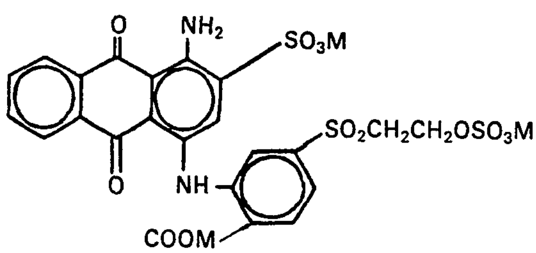

(V)

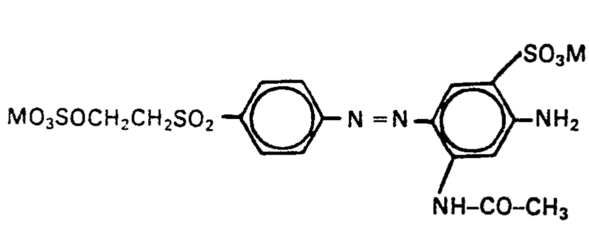

(VI)

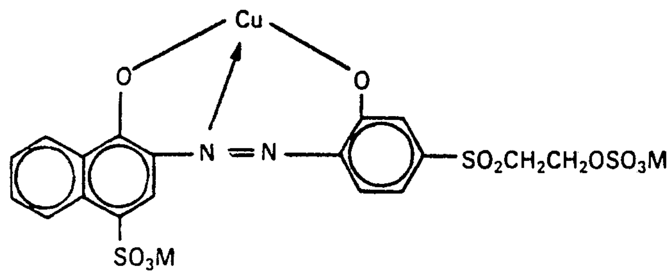

(VII)

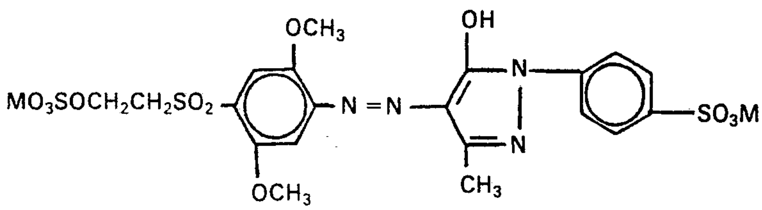

(VIII)

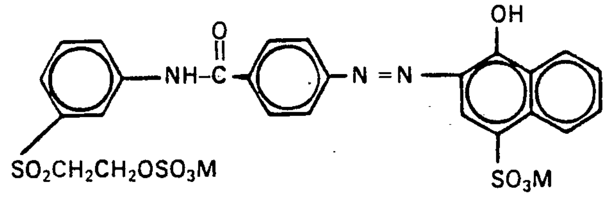

(IX)

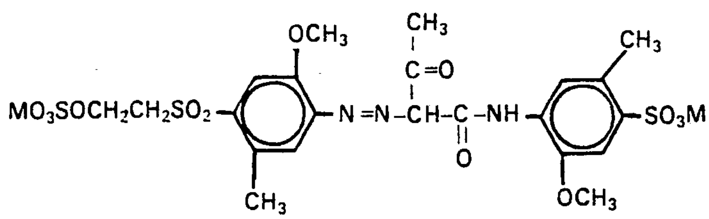

(X)

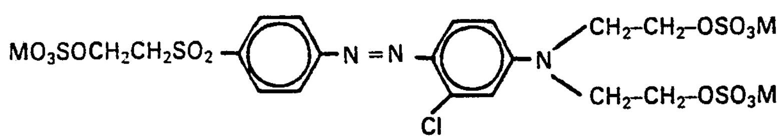

(XI)

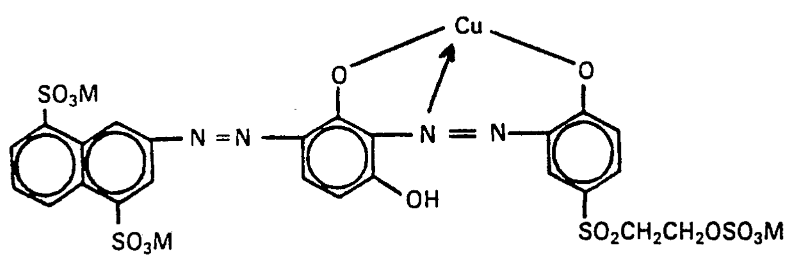

(XII)

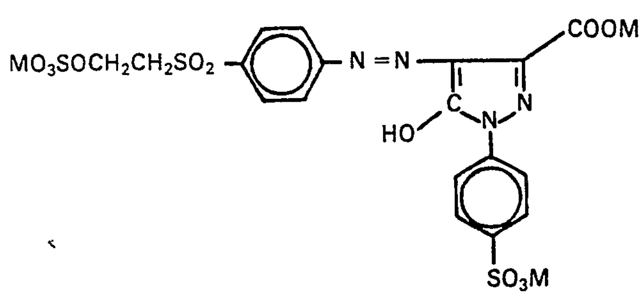

(XIII)

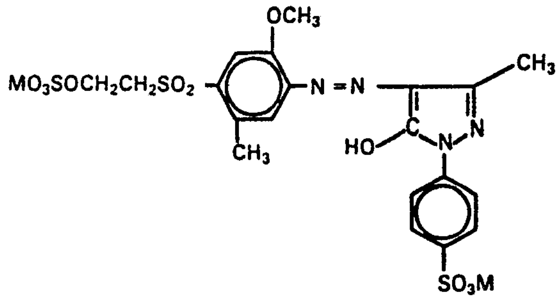

(XIV)

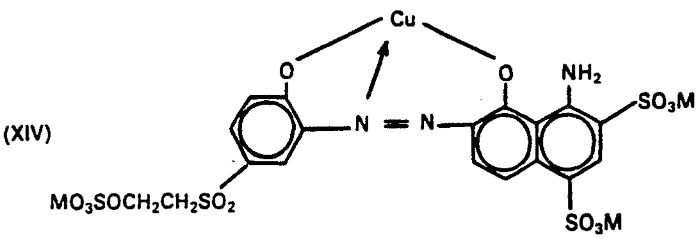

(XV)

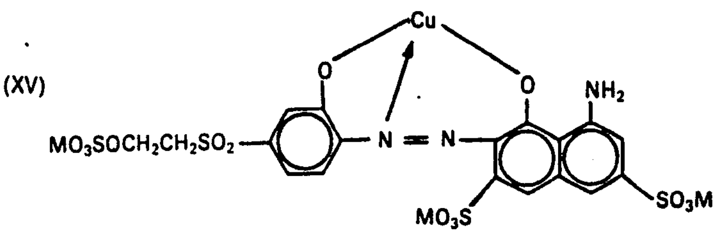

(XVI)

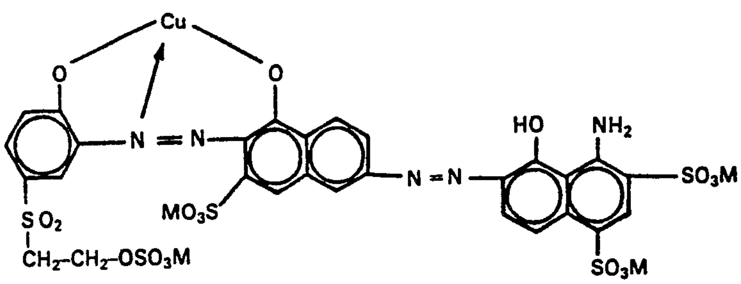

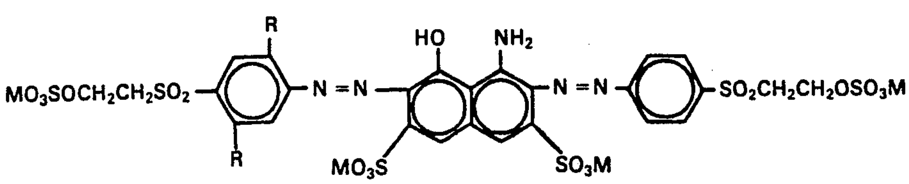

(XVII) R = H

(XVIII) R = $OCH_3$

(XIX)

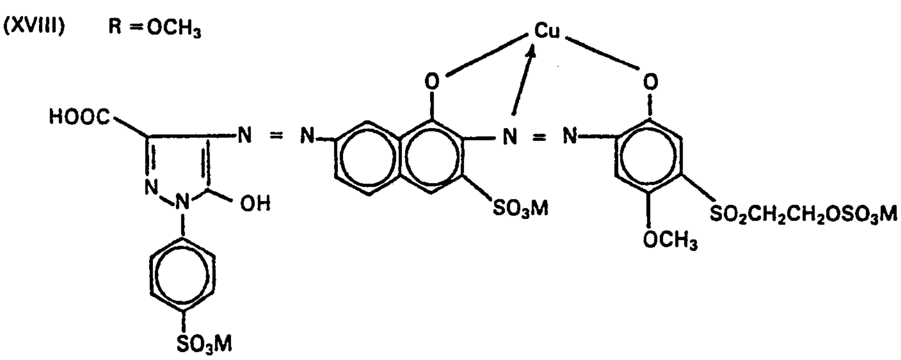

(XX)
(XXI)
and
(XXII

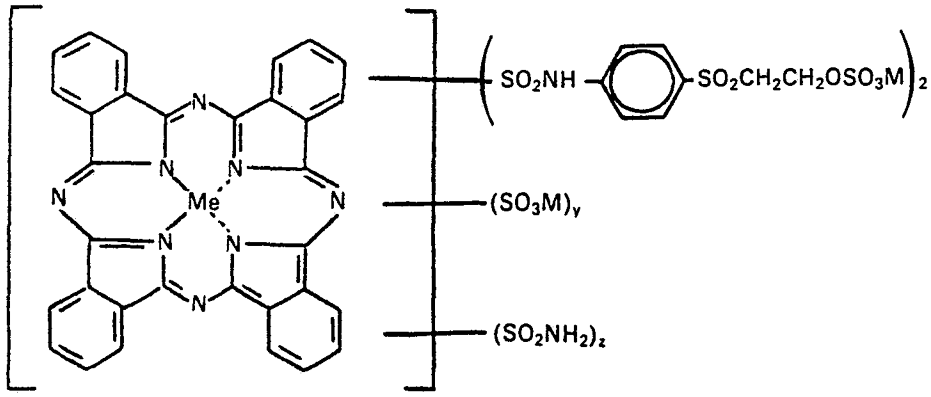

| | | | |
|---|---|---|---|
| (XX) | Me = Cu | y = z | z = 0 |
| (XXI) | Me = Ni | y = z | z = 0 |
| (XXII) | Me = Cu | y = 1 | z = 1 |

(XXIII)

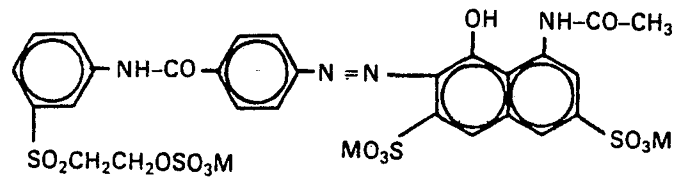

(XXIV)

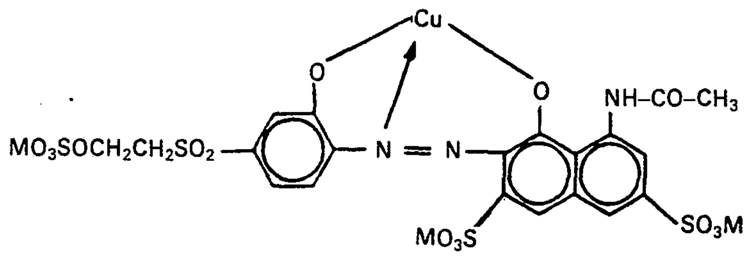

(XXV)

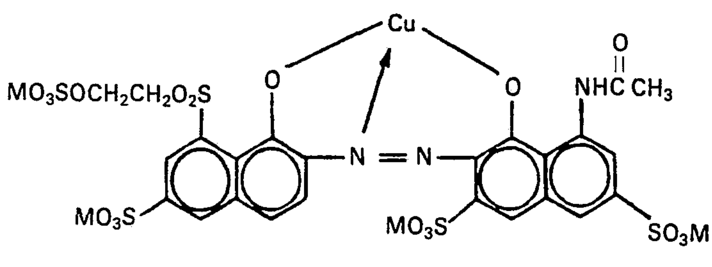

(XXVI)

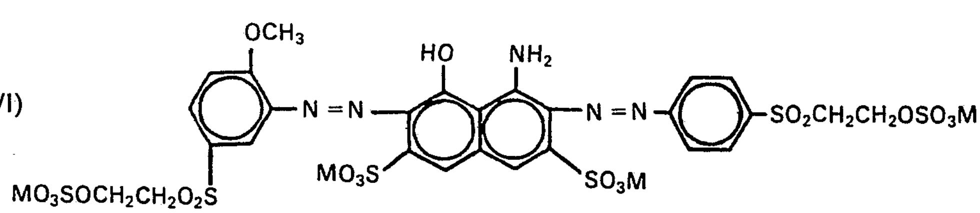

Die erfindungsgemässen Präparationen sind besonders vorteilhaft für solche faserreaktiven Farbstoffe, die Monosulfonsäuren darstellen, d.h. die lediglich eine Sulfogruppe besitzen, somit Farbstoffe der obengenannten allgemeinen Formel (1), in welchen k gleich 1 ist und insbesondere auch r die Zahl 1 bedeutet. Solche faserreaktiven Monosulfo-Farbstoffe haben nur eine begrenzte Löslichkeit, und eine teilweise Zersetzung zu dem weniger löslichen Vinylsulfonyl-Farbstoff kann deshalb zu Ausfällungen des Farbstoffes aus den wässrigen Lösungen führen. Die erfindungsgemässen Präparationen verhindern jedoch eine solche Zersetzung dieser Farbstoffe oder reduzieren sie erheblich, so dass die Farbstoffe über einen langen Zeitraum in Lösung bleiben.

Die erfindungsgemässen Präparationen zeigen auch besondere Vorteile bei deren hochkonzentrierten flüssigen Ausführungsformen. Beispielsweise kann eine flüssige Präparation mit einem Farbstoffgehalt von 30 bis 40 Gew.-% nahe am Sättigungspunkt der Farbstoffkonzentration sein. In einem solchen Falle kann die teilweise Zersetzung des Farbstoffes zu der weniger löslichen Vinylsulfonyl-Form zur Farbstoffausfällung führen. Die erfindungsgemässen Präparationen, die gegenüber einer solchen Zersetzung beständiger sind, können dementsprechend für einen langen Zeitraum sicher gelagert und aufbewahrt werden.

Die erfindungsgemässen Präparationen können 0 bis 10 Gew.-% eines wasserlöslichen, inerten anorganischen Salzes enthalten. Vorzugsweise ist der Gehalt an solch einem anorganischen Salz jedoch nicht höher als 6 Gew.-%. Solche Salze sind insbesondere die Alkalimetallchloride oder -sulfate, wie Lithium-, Natrium- und Kaliumchloride oder -sulfate, weiterhin Ammoniumchlorid oder Ammoniumsulfat, oder Mischungen solcher Salze.

Die erfindungsgemässen Präparationen können auch gegebenenfalls Hilfsmittel oder andere Substanzen enthalten, die üblicherweise verwendet werden, um die Löslichkeit des Farbstoffes oder dessen spätere Weiterverarbeitung zu verbessern bzw. zu erleichtern. Solche Mittel sind beispielsweise Caprolactam, oberflächenaktive Substanzen, Naphthalinsulfonsäure/Formaldehyd-Kondensationsprodukte und Anthrachinon-2-sulfonsäure.

Die vorliegende Erfindung kann durch die nachfolgenden Beispiele erläutert werden, in welchen die Teile und die Prozentangaben Gewichtsteile bzw. Gewichtsprozente darstellen.

Beispiele

Wässrige flüssige Farbstoffpräparationen wurden auf ihre Stabilität in folgender Weise ausgeprüft: Wässrige Lösungen der Farbstoffe entsprechend den obengenannten allgemeinen Formeln (I), (II), (III), (VI) und (XXVI) wurden in einen verschliessbaren Glasbehälter gebracht und auf einen pH-Wert gemäss der nachfolgenden Tabelle eingestellt und sodann in einem Ofen bei einer Temperatur von 40 °C gelagert. Die wässrigen Farbstofflösungen enthielten etwa 14 bis 18 Gew.-% des angegebenen Farbstoffes, 0 bis 6 Gew.-% eines der angegebenen anorganischen Salze und – in einigen Beispielen gemäss den Angaben in der Tabelle – 2 bis 3 Gew.-% eines Puffers, wie eines Phosphatsalzes. Jede der wässrigen Proben wurde auf ihren Vinylsulfon-Gehalt ausgeprüft, und zwar vor dem Lagerungstest und von Zeit zu Zeit danach. Der ermittelte Nettoanstieg an dem Vinylsulfon-Gehalt der Lösungen bei verschiedenen Lagerungszeiten ist in der Tabelle aufgeführt; wie daraus ersichtlich ist, zeigen die erfindungsgemässen flüssigen Farbstoffpräparationen, bei denen der pH-Wert bei 4,5 oder niedriger gehalten wurde und die keine Puffersubstanz enthielten, eine deutlich geringere Vinylsulfon-Bildung während ihrer Lagerung als die entsprechenden Präparationen mit einem höheren pH-Wert oder mit dem Gehalt an Puffer.

Vinylsulfon-Bildung; Differenz von Anfangs- zu Endkonzentration in %

| Farbstoff Nr. | Anfangs- pH-Wert | Puffer- gehalt | 7 Tage | 14 Tage | 28 Tage | 35 Tage | 56 Tage |
|---|---|---|---|---|---|---|---|
| I | 6.0 | 2% | 6.0 | 9.0 | 10.0 | 10.5 | – |
| | 4.5 | 2% | 0.5 | 0.5 | 2.5 | 2.5 | – |
| | 4.0 | 0% | 0 | – | 1.0 | – | – |
| II | 5.5 | 2% | 14.5 | – | 17.0 | – | – |
| | 4.5 | 2% | 4.5 | – | 6.0 | – | – |
| | 4.0 | 0% | 0 | – | 0 | – | – |
| III | 6.0 | 3% | 16.5 | – | 20 *) | – | – |
| | 6.0 | 0% | 9.5 | – | 13.0 | – | – |
| | 4.5 | 3% | 1.5 | – | 3.5 | – | – |
| | 4.5 | 0% | 0.5 | – | 2.5 | – | – |
| VI | 6.0 | 0% | 3.3 | 4.6 | 6.6 | – | 8.9 |
| | 4.5 | 0% | 0 | 0 | 0 | – | 0.3 |
| XXVI | 5.5 | 0% | – | 2.5 +) | – | – | – |
| | 4.0 | 0% | – | 0 +) | – | – | – |
| | 3.0 | 0% | – | 0 +) | – | – | – |

*) Ausfällung +) 18 Tage

**Patentansprüche**

1. Wässrige, flüssige Präparationen von faserreaktiven Farbstoffen, dadurch gekennzeichnet, dass sie im wesentlichen aus 5 bis 45 Gew.-% eines wasserlöslichen Farbstoffes mit 1 bis 3 β-Sulfatoethylsulfonyl-Gruppen, oder aus einer Mischung solcher Farbstoffe, sowie aus 0 bis 10 Gew.-% eines wasserlöslichen, inerten anorganischen Salzes und 45 bis 95 Gew.-% Wasser bestehen und einen pH-Wert zwischen etwa 2,5 und etwa 4,5 besitzen und frei von Puffersubstanzen sind.

2. Präparationen nach Anspruch 1, in welchen das inerte anorganische Salz ein Alkalimetallchlorid oder Alkalimetallsulfat oder Ammoniumchlorid oder Ammoniumsulfat oder eine Mischung solcher Salze ist.

3. Präparationen nach Anspruch 1 oder 2, dadurch gekennzeichnet, dass der Gehalt an dem inerten anorganischen Salz 0 bis 6 Gew.-% beträgt.

4. Präparationen nach einem der Ansrpüche 1 bis 3, in welchen der faserreaktive Farbstoff ein Farbstoff entsprechend der allgemeinen Formel (1)

$$(MO_3S)_k-F-(SO_2-CH_2-CH_2-OSO_3M)_r \quad (1)$$

ist, in welcher F der chromophore Rest eines Monoazo-, Disazo-, Anthrachinon- oder Phthalocyanin-Farbstoffes oder eines Kupfer-, Nickel-, Chrom- oder Kobaltkomplexes dieser Farbstoffe darstellt, k eine ganze Zahl von 1 bis 4 ist, r eine ganze Zahl von 1 bis 3 bedeutet und M für ein Wasserstoffatom oder für das Äquivalent eines Metalls, insbesondere eines Alkali- oder Erdalkalimetalls, steht.

5. Präparationen nach Anspruch 4, dadurch gekennzeichnet, dass k die Zahl 1 und r die Zahl 1 ist.

6. Präparationen nach einem der Ansprüche 1 bis 4, dadurch gekennzeichnet, dass der faserreaktive Farbstoff ein Farbstoff entsprechend der allgemeinen Formel (A)

A 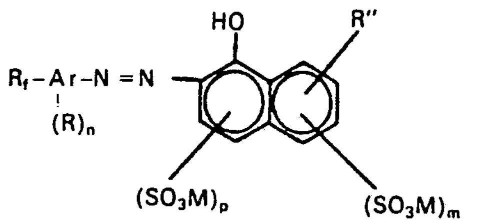

ist, in welcher bedeuten:

M ist ein Wasserstoffatom oder ein Alkalimetall, wie Natrium, Kalium oder Lithium;

Ar ist ein Benzolkern oder ein Naphthalinkern oder ein Rest der Formel

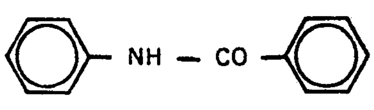

wobei die für Ar angegebenen Reste oder Substituenten getrennt an den Benzolkernen oder auch gleichzeitig an einen der Benzolkerne gebunden sein können;

$R_f$ ist eine Gruppe der Formel $-SO_2-CH_2-CH_2-OSO_3M$ mit M der obengenannten Bedeutung;

R ist jedes eine Alkylgruppe von 1 bis 4 C-Atomen, eine Alkoxygruppe von 1 bis 4 C-Atomen, ein Bromatom, ein Chloratom, eine Nitrogruppe, eine Trifluormethylgruppe, eine Alkylaminogruppe mit einem Alkylrest von 1 bis 4 C-Atomen, eine Carboxygruppe oder eine Sulfogruppe, wobei die R zueinander gleiche oder voneinander verschiedene Bedeutungen besitzen können;

R″ ist eine Aminogruppe, eine Alkylaminogruppe mit einem Alkylrest von 1 bis 4 C-Atomen, eine Alkanoylaminogruppe mit einem Alkylrest von 1 bis 4 C-Atomen, die Benzoylaminogruppe oder eine durch Chlor, Brom, Nitro, Trifluormethyl, Alkyl von 1 bis 4 C-Atomen und/oder Alkoxy von 1 bis 4 C-Atomen substituierte Benzoylaminogruppe;

m ist die Zahl Null, 1 oder 2;

n ist die Zahl Null, 1 oder 2;

p ist die Zahl Null oder 1,

wobei die obengenannten Formelglieder zueinander gleiche oder voneinander verschiedene Bedeutungen besitzen können.

7. Präparationen nach einem der Ansprüche 1 bis 4, dadurch gekennzeichnet, dass der faserreaktive Farbstoff ein Farbstoff entsprechend der allgemeinen Formel (B)

B 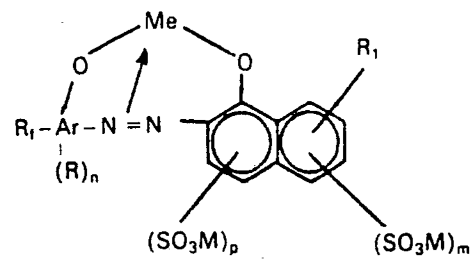

ist, in welcher bedeuten:

M ist ein Wasserstoffatom oder ein Alkalimetall, wie Natrium, Kalium oder Lithium;

Ar ist ein Benzolkern oder ein Naphthalinkern oder ein Rest der Formel

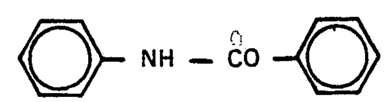

wobei die für Ar angegebenen Reste oder Substituenten getrennt an den Benzolkernen oder auch gleichzeitig an einen der Benzolkerne gebunden sein können;

$R_f$ ist eine Gruppe der Formel $-SO_2-CH_2-CH_2-OSO_3M$ mit M der obengenannten Bedeutung;

R ist jedes eine Alkylgruppe von 1 bis 4 C-Atomen, eine Alkoxygruppe von 1 bis 4 C-Atomen, ein Bromatom, ein Chloratom, eine Nitrogruppe, eine Trifluormethylgruppe, eine Alkylaminogruppe mit einem Alkylrest von 1 bis 4 C-Atomen, eine Carboxygruppe oder eine Sulfogruppe, wobei die R zueinander gleiche oder voneinander verschiedene Bedeutungen besitzen können;

$R_1$ ist eine Aminogruppe, eine Alkylaminogruppe mit einem Alkylrest von 1 bis 4 C-Atomen, eine Alkanoylaminogruppe mit einem Alkylrest von 1 bis 4 C-Atomen, die Benzoylaminogruppe oder eine durch Chlor, Brom, Nitro, Trifluormethyl, Alkyl von 1 bis 4 C-Atomen, und/oder

Alkoxy von 1 bis 4 C-Atomen substituierte Benzoylaminogruppe;

Me ist ein Kupfer- oder Nickelatom oder das Äquivalent eines Kobalt- oder Chromatoms;

m ist die Zahl Null, 1 oder 2;

n ist die Zahl Null, 1 oder 2;

p ist die Zahl Null oder 1,

wobei die obengenannten Formelglieder zueinander gleiche oder voneinander verschiedene Bedeutungen besitzen können.

8. Präparationen nach einem der Ansprüche 1 bis 4, dadurch gekennzeichnet, dass der faserreaktive Farbstoff ein Farbstoff entsprechend der allgemeinen Formel (C) oder (D)

(C) 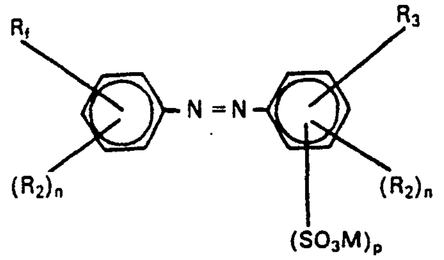

(D) 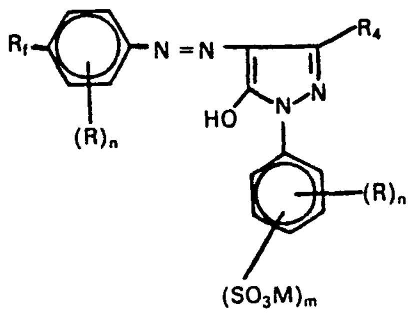

ist, in welcher bedeuten:

M ist ein Wasserstoffatom oder ein Alkalimetall, wie Natrium, Kalium oder Lithium;

$R_f$ ist eine Gruppe der Formel $-SO_2-CH_2-CH_2-OSO_3M$ mit M der obengenannten Bedeutung;

R ist jedes eine Alkylgruppe von 1 bis 4 C-Atomen, eine Alkoxygruppe von 1 bis 4 C-Atomen, ein Bromatom, ein Chloratom, eine Nitrogruppe, eine Trifluormethylgruppe, eine Alkylaminogruppe mit einem Alkylrest von 1 bis 4 C-Atomen, eine Carboxygruppe oder eine Sulfogruppe, wobei die R zueinander gleiche oder voneinander verschiedene Bedeutungen besitzen können;

$R_2$ ist eine Alkylgruppe von 1 bis 4 C-Atomen, eine Alkoxygruppe von 1 bis 4 C-Atomen, ein Bromatom, ein Chloratom, eine Nitrogruppe, eine Trifluormethylgruppe, eine Carboxygruppe, eine Sulfogruppe, eine Aminogruppe, eine Alkylaminogruppe mit einem Alkylrest von 1 bis 4 C-Atomen, eine Alkanoylaminogruppe mit einem Alkylrest von 1 bis 4 C-Atomen, eine Benzoylaminogruppe oder eine durch Chlor, Brom, Nitro, Trifluormethyl, Alkyl von 1 bis 4 C-Atomen und/oder Alkoxy von 1 bis 4 C-Atomen substituierte Benzoylaminogruppe, wobei die beiden $R_2$, falls n gleich 2 ist, jeweils zueinander gleiche oder voneinander verschiedene Bedeutungen besitzen können;

$R_3$ ist ein Wasserstoffatom oder ein Rest der Formel

$-NH-CH_2-CH_2-OH$, $-N(CH_2-CH_2-OH)_2$,
$-NH-CH_2-CH_2-O-CO-CH_3$,
$-N(CH_2-CH_2-O-CO-CH_3)_2$,
$-NH-CH_2-CH_2-OSO_3M$,
$-N(CH_2-CH_2-OSO_3M)_2$,
$-NH-CH_2-CH_2-CN$ oder $-N(CH_2-CH_2-CN)_2$,

wobei M die obengenannte Bedeutung besitzt;

$R_4$ ist eine Alkylgruppe von 1 bis 4 C-Atomen, eine Carboxygruppe, eine Carbalkoxygruppe von 1 bis 4 C-Atomen im Alkylrest oder eine Carbamoylgruppe;

m ist die Zahl Null, 1 oder 2;

n ist die Zahl Null, 1 oder 2;

p ist die Zahl Null oder 1,

wobei die obengenannten Formelglieder zueinander gleich oder voneinander verschiedene Bedeutungen besitzen können.

9. Präparationen nach einem der Ansprüche 1 bis 4, dadurch gekennzeichnet, dass der faserreaktive Farbstoff ein Farbstoff entsprechend der allgemeinen Formel (E)

(E) 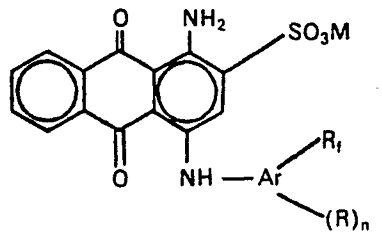

ist, in welcher bedeuten:

M ist ein Wasserstoffatom oder ein Alkalimetall, wie Natrium, Kalium oder Lithium;

Ar ist ein Benzolkern oder ein Naphthalinkern oder ein Rest der Formel

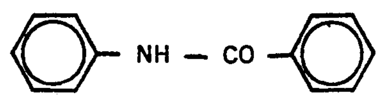

wobei die für Ar angegebenen Reste oder Substituenten getrennt an den Benzolkernen oder auch gleichzeitig an einen der Benzolkerne gebunden sein können;

$R_f$ ist eine Gruppe der Formel $-SO_2-CH_2-CH_2-OSO_3M$ mit M der obengenannten Bedeutung;

R ist jedes eine Alkylgruppe von 1 bis 4 C-Atomen, eine Alkoxygruppe von 1 bis 4 C-Atomen, ein Bromatom, ein Chloratom, eine Nitrogruppe, eine Trifluormethylgruppe, eine Alkylaminogruppe mit einem Alkylrest von 1 bis 4 C-Atomen, eine Carboxygruppe oder eine Sulfogruppe, wobei die R zueinander gleiche oder voneinander verschiedene Bedeutungen besitzen können;

n ist die Zahl Null, 1 oder 2,

wobei die obengenannten Formelglieder zueinander gleiche oder voneinander verschiedene Bedeutungen besitzen können.

10. Präparationen nach einem der Ansprüche 1 bis 4, dadurch gekennzeichnet, dass der faserreaktive Farbstoff ein Farbstoff entsprechend der allgemeinen Formel (F)

(F)

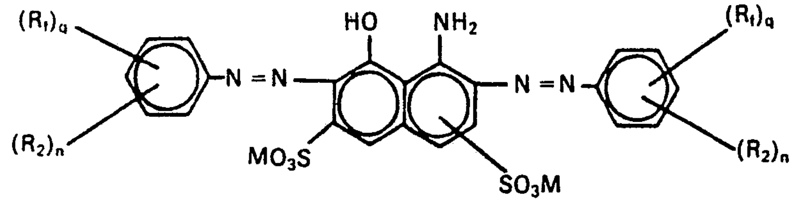

ist, in welcher bedeuten:

M ist ein Wasserstoffatom oder ein Alkalimetall, wie Natrium, Kalium oder Lithium;

$R_f$ ist eine Gruppe der Formel $-SO_2-CH_2-CH_2-OSO_3M$ mit M der obengenannten Bedeutung;

$R_2$ ist eine Alkylgruppe von 1 bis 4 C-Atomen, eine Alkoxygruppe von 1 bis 4 C-Atomen, ein Bromatom, ein Chloratom, eine Nitrogruppe, eine Trifluormethylgruppe, eine Carboxygruppe, eine Sulfogruppe, eine Aminogruppe, eine Alkylaminogruppe mit einem Alkylrest von 1 bis 4 C-Atomen, eine Alkanoylaminogruppe mit einem Alkylrest von 1 bis 4 C-Atomen, eine Benzoylaminogruppe oder eine durch Chlor, Brom, Nitro, Trifluormethyl, Alkyl von 1 bis 4 C-Atomen und/oder Alkoxy von 1 bis 4 C-Atomen substituierte Benzoylaminogruppe, wobei die beiden $R_2$, falls n gleich 2 ist, jeweils zueinander gleiche oder voneinander verschiedene Bedeutungen besitzen können;

q ist die Zahl Null oder 1 mit der Massgabe, dass zumindest eines der Formelglieder q in der jeweiligen Strukturformel die Zahl 1 bedeutet, wobei die obengenannten Formelglieder zueinander gleiche oder voneinander verschiedene Bedeutungen besitzen können.

11. Präparationen nach einem der Ansprüche 1 bis 4, dadurch gekennzeichnet, dass der faserreaktive Farbstoff ein Farbstoff entsprechend der allgemeinen Formel (G)

(G)

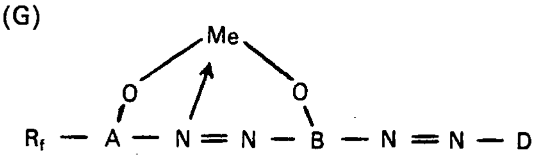

ist, in welcher bedeuten:

$R_f$ ist eine Gruppe der Formel $-SO_2-CH_2-CH_2-OSO_3M$ mit M der nachstehend genannten Bedeutung;

Me ist ein Kupfer- oder Nickelatom oder das Äquivalent eines Kobalt- oder Chromatoms;

A ist ein Rest der nachstehenden und definierten Formel (a) oder (b),

B ist ein Rest der nachstehenden und definierten Formel (c) oder (d),

D ist ein Rest der nachstehenden und definierten Formel (e) oder (f)

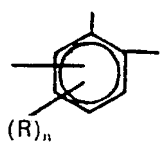 (a)

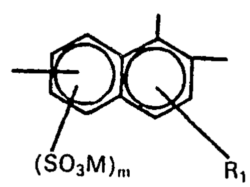 (b)

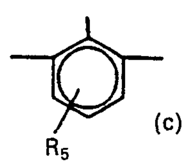 (c)

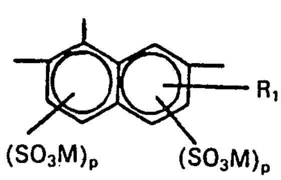 (d)

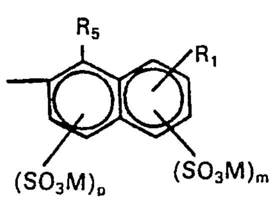

(e)

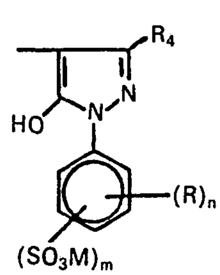 (f)

M ist ein Wasserstoffatom oder ein Alkalimetall, wie Natrium, Kalium oder Lithium;

R ist jedes eine Alkylgruppe von 1 bis 4 C-Atomen, eine Alkoxygruppe von 1 bis 4 C-Atomen, ein Bromatom, ein Chloratom, eine Nitrogruppe, eine Trifluormethylgruppe, eine Alkylaminogruppe mit einem Alkylrest von 1 bis 4 C-Atomen, eine Carboxygruppe oder eine Sulfogruppe, wobei die R zueinander gleiche oder voneinander verschiedene Bedeutungen besitzen können;

$R_1$ ist eine Aminogruppe, eine Alkylaminogruppe mit einem Alkylrest von 1 bis 4 C-Atomen, eine Alkanoylaminogruppe mit einem Alkylrest von 1 bis 4 C-Atomen, die Benzoylaminogruppe oder eine durch Chlor, Brom, Nitro, Trifluormethyl, Alkyl von 1 bis 4 C-Atomen, und/oder Alkoxy von 1 bis 4 C-Atomen substituierte Benzoylaminogruppe;

$R_4$ ist eine Alkylgruppe von 1 bis 4 C-Atomen, eine Carboxygruppe, eine Carbalkoxygruppe von 1 bis 4 C-Atomen im Alkylrest oder eine Carbamoylgruppe;

$R_5$ ist ein Wasserstoffatom oder eine Hydroxygruppe;

m ist die Zahl Null, 1 oder 2;

n ist die Zahl Null, 1 oder 2;

p ist die Zahl Null oder 1,

wobei die obengenannten Formelglieder zueinander gleiche oder voneinander verschiedene Bedeutungen besitzen können.

12. Präparationen nach einem der Ansprüche 1 bis 4, dadurch gekennzeichnet, dass der faserreaktive Farbstoff ein Farbstoff entsprechend der allgemeinen Formel (H)

(H) 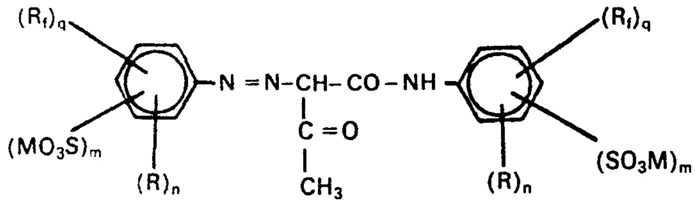

ist, in welcher bedeuten:

M ist ein Wasserstoffatom oder ein Alkalimetall, wie Natrium, Kalium oder Lithium;

$R_f$ ist eine Gruppe der Formel $-SO_2-CH_2-CH_2-OSO_3M$ mit M der obengenannten Bedeutung;

R ist jedes eine Alkylgruppe von 1 bis 4 C-Atomen, eine Alkoxygruppe von 1 bis 4 C-Atomen, ein Bromatom, ein Chloratom, eine Nitrogruppe, eine Trifluormethylgruppe, eine Alkylaminogruppe mit einem Alkylrest von 1 bis 4 C-Atomen, eine Carboxygruppe oder eine Sulfogruppe, wobei die R zueinander gleiche oder voneinander verschiedene Bedeutungen besitzen können;

m ist die Zahl Null, 1 oder 2;

n ist die Zahl Null, 1 oder 2;

q ist die Zahl Null oder 1 mit der Massgabe, dass zumindestens eines der Formelglieder q in der jeweiligen Strukturformel die Zahl 1 bedeutet,

wobei die obengenannten Formelglieder zueinander gleiche oder voneinander verschiedene Bedeutungen besitzen können.

13. Präparationen nach einem der Ansprüche 1 bis 4, dadurch gekennzeichnet, dass der faserreaktive Farbstoff ein Farbstoff entsprechend der allgemeinen Formel (J)

(J) 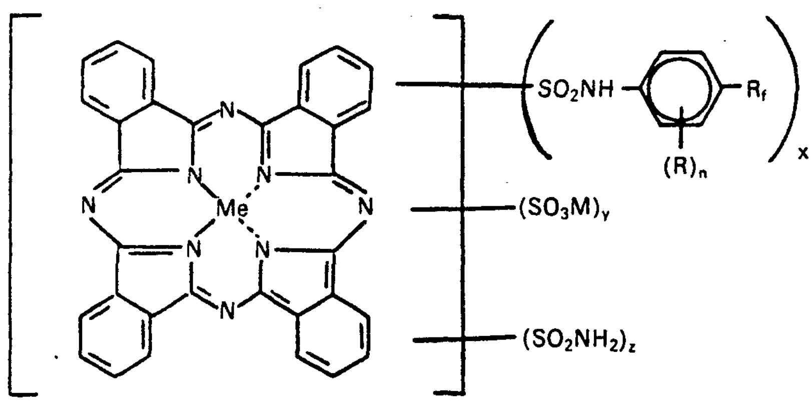

ist, in welcher bedeuten:

M ist ein Wasserstoffatom oder ein Alkalimetall, wie Natrium, Kalium oder Lithium;

$R_f$ ist eine Gruppe der Formel $-SO_2-CH_2-CH_2-OSO_3M$ mit M der obengenannten Bedeutung;

R ist jedes eine Alkylgruppe von 1 bis 4 C-Atomen, eine Alkoxygruppe von 1 bis 4 C-Atomen, ein Bromatom, ein Chloratom, eine Nitrogruppe, eine Trifluormethylgruppe, eine Alkylaminogruppe mit einem Alkylrest von 1 bis 4 C-Atomen, eine Carboxygruppe oder eine Sulfogruppe, wobei die R zueinander gleiche oder voneinander verschiedene Bedeutungen besitzen können;

Me ist ein Kupfer- oder Nickelatom oder das Äquivalent eines Kobalt- oder Chromatoms;
n ist die Zahl Null, 1 oder 2,
x ist die Zahl 1 oder 2,
y ist die Zahl 1 oder 2,
z ist die Zahl Null, 1 oder 2,
wobei die Summe von (x + y + z) die Zahl 3 oder 4 ist, und wobei die obengenannten Formelglieder zueinander gleiche oder voneinander verschiedene Bedeutungen besitzen können.

14. Präparationen nach einem der Ansprüche 1 bis 4, dadurch gekennzeichnet, dass der faserreaktive Farbstoff der Farbstoff der Formel (I)

(I)

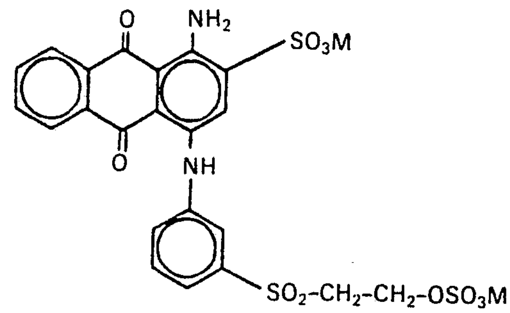

mit M der in Anspruch 4 genannte Bedeutung ist.

15. Präparationen nach einem der Ansprüche 1 bis 4, dadurch gekennzeichnet, dass der faserreaktive Farbstoff ein Farbstoff der Formel (II) oder (III)

(II)

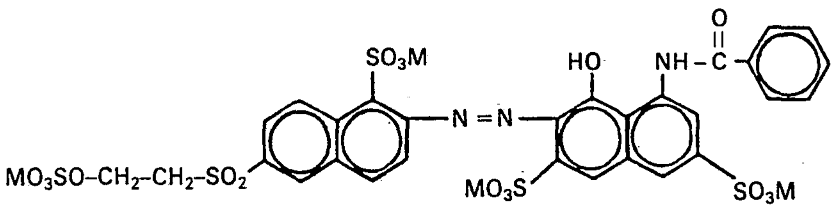

(III)

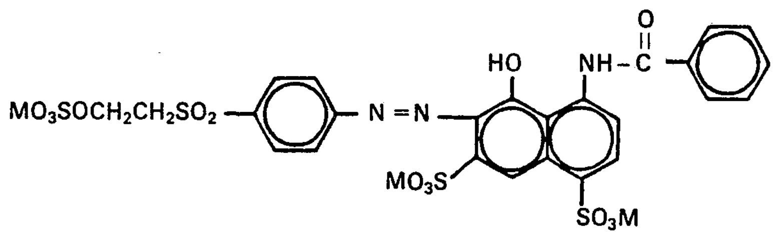

mit M der in Anspruch 4 genannten Bedeutung ist.

16. Präparationen nach einem der Ansprüche 1 bis 4, dadurch gekennzeichnet, dass der Farbstoff ein Farbstoff der allgemeinen Formel

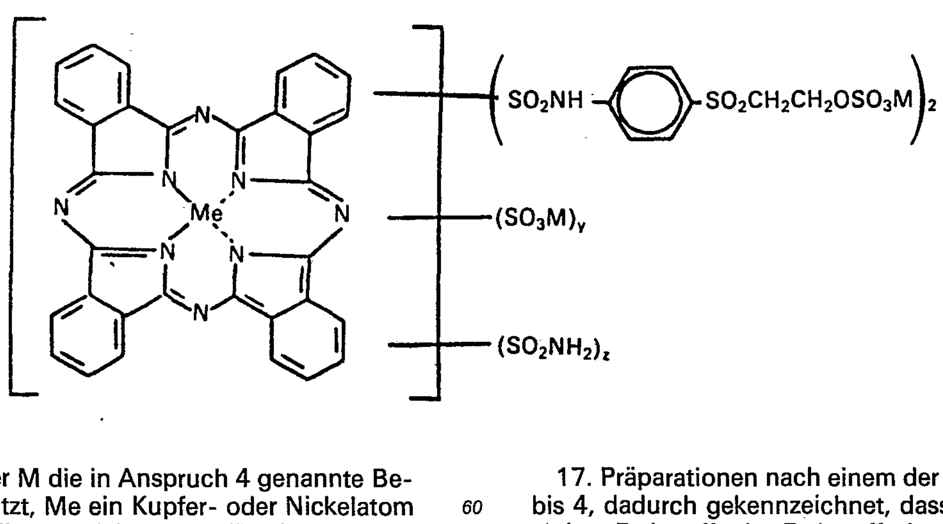

ist, in welcher M die in Anspruch 4 genannte Bedeutung besitzt, Me ein Kupfer- oder Nickelatom bedeutet, y die Zahl 2 ist und z für die Zahl Null steht.

17. Präparationen nach einem der Ansprüche 1 bis 4, dadurch gekennzeichnet, dass der faserreaktive Farbstoff ein Farbstoff der Formel (V), (VIII), (IX), (X), (XII), (XIII) oder (XXIII)

(V)

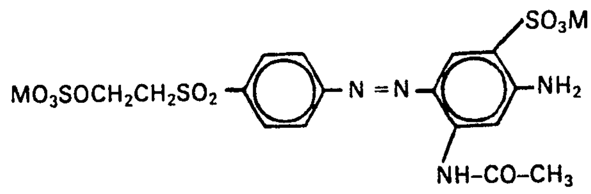

(VIII)

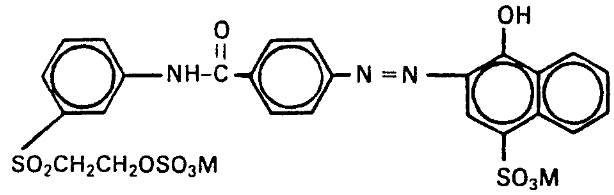

(IX)

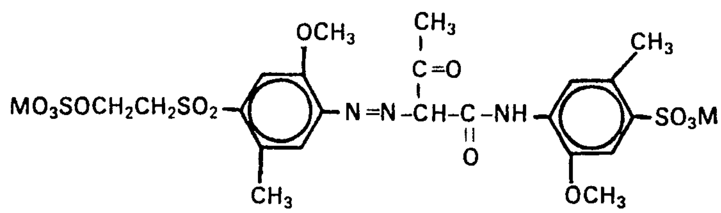

(X)

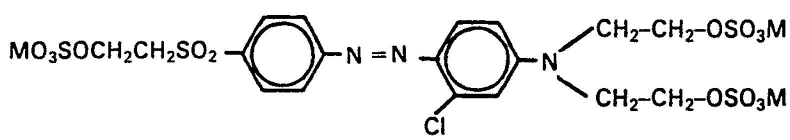

(XII)

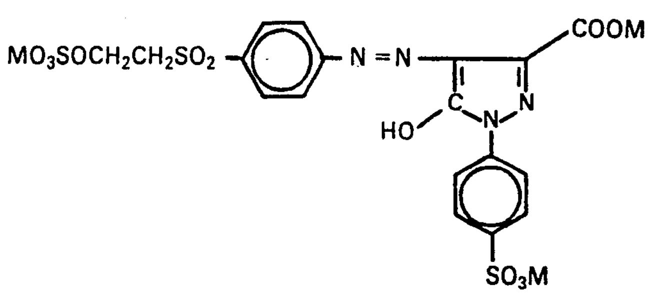

(XIII)

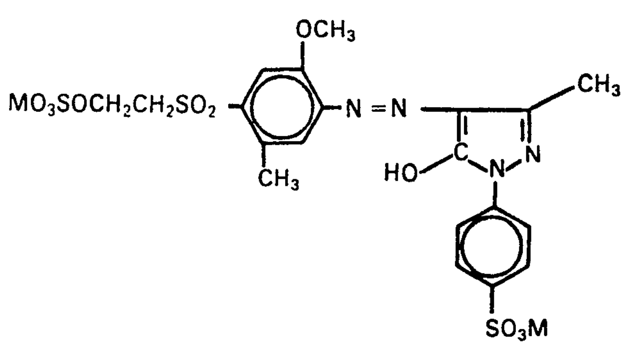

(XXIII) 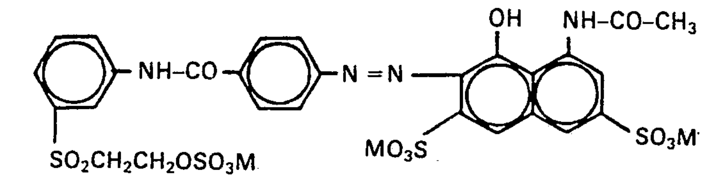

ist, in welchen M die in Anspruch 4 genannte Bedeutung besitzt.

18. Präparationen nach einem der Ansprüche 1 bis 4, dadurch gekennzeichnet, dass der faserreaktive Farbstoff ein Farbstoff der Formel (VI), (XI), (XIV), (XVI) oder (XV)

(VI) 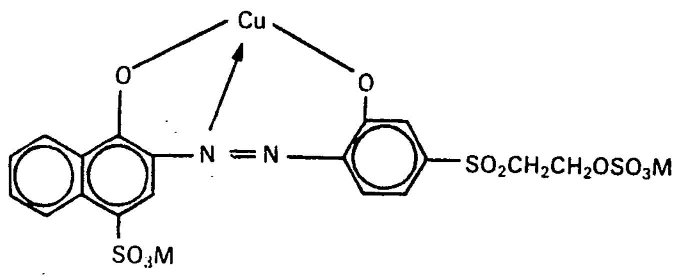

(XI) 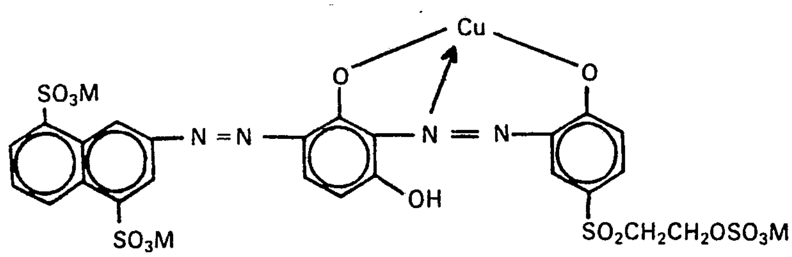

(XIV) 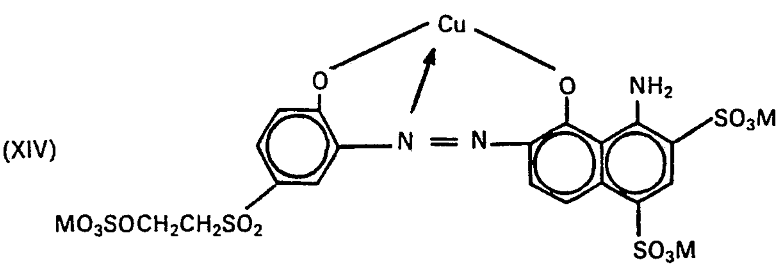

(XVI) 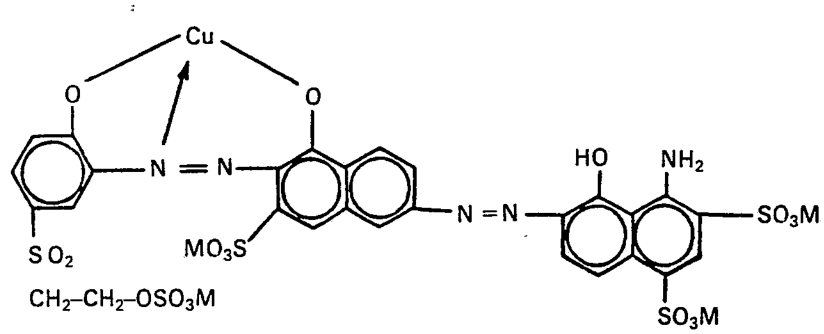

(XV) 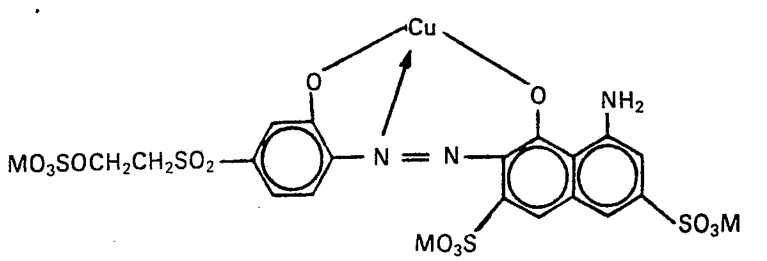

ist, in welcher M die in Anspruch 4 genannte Bedeutung besitzt.

19. Präparationen nach einem der Ansprüche 1 bis 4, dadurch gekennzeichnet, dass der faserreaktive Farbstoff ein Farbstoff der allgemeinen Formel

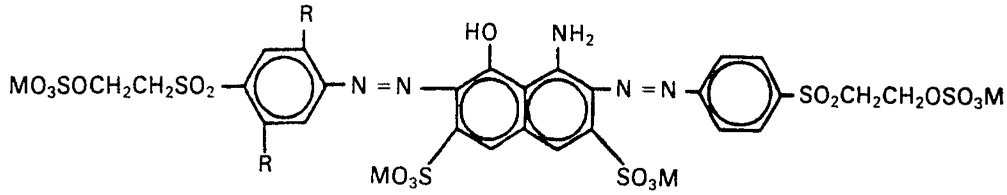

ist, in welcher M die in Anspruch 4 genannte Bedeutung besitzt und beide R jeweils ein Wasserstoffatom oder jeweils eine Methoxygruppe bedeuten.

20. Präparationen nach einem der Ansprüche 1 bis 4, dadurch gekennzeichnet, dass der faserreaktive Farbstoff ein Farbstoff der allgemeinen Formel

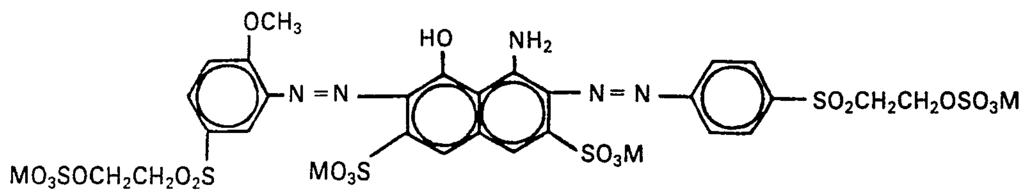

mit M der in Anspruch 4 genannten Bedeutung ist.

21. Präparationen nach Anspruch 7, 11, 13 oder 16, dadurch gekennzeichnet, dass Me ein Kupferatom bedeutet.

22. Präparationen nach einem der Ansprüche 1 bis 21, dadurch gekennzeichnet, dass sie 10 bis 20 Gew.-% eines der genannten faserreaktiven Farbstoffe, 0 bis 6 Gew.-% eines der genannten inerten anorganischen Salze und 75 bis 90 Gew.-% Wasser enthalten oder daraus bestehen.

23. Präparationen nach einem der Ansprüche 1 bis 21, dadurch gekennzeichnet, dass sie 30 bis 40 Gew.-% eines der genannten faserreaktiven Farbstoffe, 0 bis 6 Gew.-% eines der genannten inerten anorganischen Salze und 25 bis 70 Gew.-% Wasser enthalten oder daraus bestehen.

**Revendications**

1. Compositions aqueuses liquides de colorants réactifs (réactifs à l'égard des fibres), compositions caractérisées en ce qu'elles sont essentiellement constituées de 5 à 45% en poids d'un colorant hydrosoluble contenant de 1 à 3 radicaux sulfato-2 éthylsulfonyles, ou d'un mélange de colorants de ce genre, de 0 à 10% en poids d'un sel minéral inerte soluble dans l'eau, et de 45 à 95% en poids d'eau, et en ce qu'elles ont un pH compris entre environ 2,5 et environ 4,5 et sont dépourvues de substances tampons.

2. Compositions selon la revendication 1 dans lesquelles le sel minéral inerte est un chlorure de métal alcalin, un sulfate de métal alcalin, le chlorure d'ammonium ou le sulfate d'ammonium, ou un mélange de ces sels.

3. Compositions selon l'une des revendications 1 et 2, caractérisées en ce que la teneur en le sel minéral inerte est de 0 à 6% en poids.

4. Compositions selon l'une des revendications 1 à 3, dans lesquelles le colorant réactif est un colorant répondant à la formule générale 1:

$$(MO_3S)_k-F-(SO_2-CH_2-CH_2-OSO_3M)_r \quad (1)$$

dans laquelle:

F représente le radical chromophore d'un colorant monoazoïque, disazoïque, anthraquinonique ou phtalocyanique ou d'un complexe de cuivre, de nickel, de chrome ou de cobalt dérivant d'un de ces colorants,

k représente un nombre entier de 1 à 4,

r représente un nombre entier de 1 à 3 et

M représente un atome d'hydrogène ou l'équivalent d'un métal, plus spécialement d'un métal alcalin ou d'un métal alcalino-terreux.

5. Compositions selon la revendication 4 caractérisées en ce que k et r sont égaux chacun à 1.

6. Compositions selon l'une quelconque des revendications 1 à 4, caractérisées en ce que le colorant réactif est un colorant répondant à la formula générale A:

A 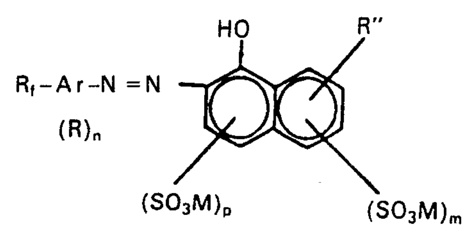

dans laquelle:

M représente un atome d'hydrogène ou un métal alcalin, tel que le sodium, le potassium ou le lithium,

Ar représente un noyau benzénique, un noyau naphtalénique ou un radical de formule:

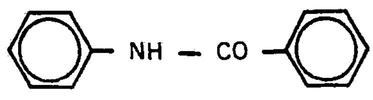

les radicaux ou les substituants qui sont représentés liés à Ar pouvant être unis séparément aux noyaux benzéniques ou encore en même temps à l'un des noyaux benzéniques,

$R_f$ représente un radical de formule $-SO_2-CH_2-CH_2-OSO_3M$ où M a la signification précédemment donnée,

R représente, ou chacun des R représente, indépendamment l'un de l'autre, un radical alkyle en $C_1-C_4$, un radical alcoxy en $C_1-C_4$, un atome de brome, un atome de chlore, un radical nitro, un radical trifluorométhyle, un radical alkylamino à alkyle en $C_1-C_4$, un radical carboxy ou un radical sulfo,

R'' représente un radical amino, un radical alkylamino à alkyle en $C_1-C_4$, un radical alcanoylamino à alkyle en $C_1-C_4$, un radical benzoylamino ou un radical benzoylamino porteur d'un atome de chlore, d'un atome de brome, d'un nitro, d'un trifluorométhyle, d'un alkyle en $C_1-C_4$ et/ou d'un alcoxy en $C_1-C_4$,

m est égal à 0, à 1 ou à 2,

n est égal à 0, à 1 ou à 2 et

p est égal à 0 ou à 1,

les mêmes symboles pouvant avoir, dans une même molécule, des significations identiques ou des significations différentes les uns par rapport aux autres.

7. Compositions selon l'une quelconque des revendications 1 à 4, caractérisées en ce que le colorant réactif est un colorant répondant à la formule générale B:

B 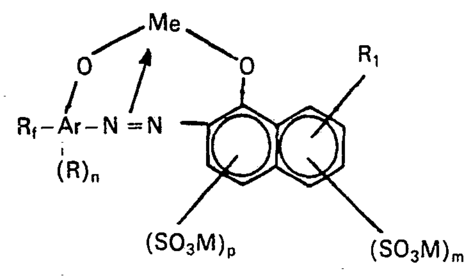

dans laquelle:

M représente un atome d'hydrogène ou un métal alcalin, tel que le sodium, le potassium ou le lithium,

Ar représente un noyau benzénique, un noyau naphtalénique ou un radical de formule:

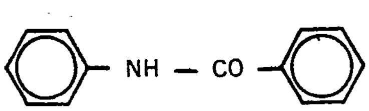

les radicaux ou les substituants qui sont représentés liés à Ar pouvant être unis séparément aux noyaux benzéniques ou encore en même temps à l'un des noyaux benzéniques,

$R_f$ représente un radical de formule $-SO_2-CH_2-CH_2-OSO_3M$ où M a la signification précédemment donnée,

R représente, ou chacun des R représente, indépendamment l'un de l'autre, un radical alkyle en $C_1-C_4$, un radical alcoxy en $C_1-C_4$, un atome de brome, un atome de chlore, un radical nitro, un radical trifluorométhyle, un radical alkylamino à alkyle en $C_1-C_4$, un radical carboxy ou un radical sulfo,

$R_1$ représente un radical amino, un radical alkylamino dont l'alkyle contient de 1 à 4 atomes de carbone, un radical alcanoylamino dont l'alkyle contient de 1 à 4 atomes de carbone, un radical benzoylamino ou un radical benzoylamino porteur d'un atome de chlore, d'un atome de brome, d'un nitro, d'un trifluorométhyle, d'un alkyle en $C_1-C_4$ et/ou d'un alcoxy en $C_1-C_4$,

Me représente un atome de cuivre ou de nickel ou l'équivalent d'un atome de cobalt ou de chrome,

m est égal à 0, à 1 ou à 2,

n est égal à 0, à 1 ou à 2 et

p est égal à 0 ou à 1,

les mêmes symboles pouvant avoir, dans une même molécule, des significations identiques ou des significations différentes les uns par rapport aux autres.

8. Compositions selon l'une quelconque des revendications 1 à 4, caractérisées en ce que le colorant réactif est un colorant répondant à l'une des formules C et D:

(C) 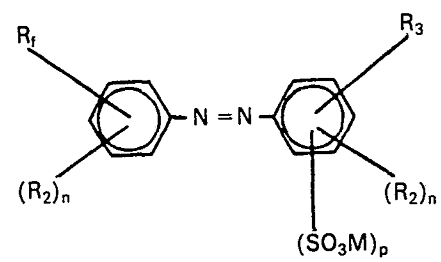

(D) 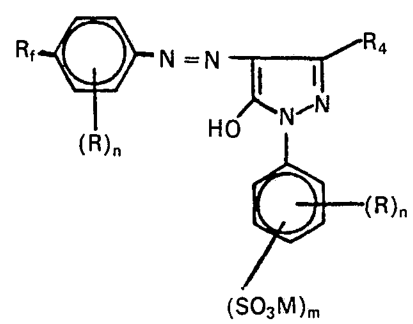

dans lesquelles:

M représente un atome d'hydrogène ou un métal alcalin, tel que le sodium, le potassium ou le lithium,

$R_f$ représente un radical de formule $-SO_2-CH_2-CH_2-OSO_3M$ où M a la signification précédemment donnée,

R représente, ou chacun des R représente indépendamment l'un de l'autre, un radical alkyle en $C_1-C_4$, un radical alcoxy en $C_1-C_4$, un atome de brome, un atome de chlore, un radical nitro, un radical trifluorométhyle, un radical alkylamino à alkyle en $C_1-C_4$, un radical carboxy ou un radical sulfo,

$R_2$ représente un alkyle en $C_1$–$C_4$, un alcoxy en $C_1$–$C_4$, un atome de brome, un atome de chlore, un radical nitro, un radical trifluorométhyle, un radical carboxy, un radical sulfo, un radical amino, un radical alkylamino à alkyle en $C_1$–$C_4$, un radical alcanoylamino à alkyle en $C_1$–$C_4$, un radical benzoylamino ou un radical benzoylamino porteur d'un atome de chlore, d'un atome de brome, d'un nitro, d'un trifluorométhyle, d'un alkyle en $C_1$–$C_4$ et/ou d'un alcoxy en $C_1$–$C_4$, les deux $R_2$, dans le cas où n est égal à 2, pouvant avoir la même signification ou des significations différentes l'un par rapport à l'autre,

$R_3$ représente un atome d'hydrogène ou l'un des radicaux suivants:

$-NH-CH_2-CH_2-OH$, $-N(CH_2-CH_2-OH)_2$,
$-NH-CH_2-CH_2-O-CO-CH_3$,
$-N(CH_2-CH_2-O-CO-CH_3)_2$,
$-NH-CH_2-CH_2-OSO_3M$,
$-N(CH_2-CH_2-OSO_3M)_2$,
$-NH-CH_2-CH_2-CN$ et $-N(CH_2-CH_2-CN)_2$,

où M a la signification précédemment donnée,

$R_4$ représente un radical alkyle en $C_1$–$C_4$, un radical carboxy, un radical alcoxycarbonyle à alkyle en $C_1$–$C_4$ ou un radical carbamoyle,

m est égal à 0, à 1 ou à 2,

n est égal à 0, à 1 ou à 2 et

p est égal à 0 ou à 1,

les mêmes symboles pouvant avoir, dans une même molécule, des significations identiques ou des significations différentes les uns par rapport aux autres.

9. Compositions selon l'une quelconque des revendications 1 à 4, caractérisées en ce que le colorant réactif est un colorant répondant à la formule générale E:

(E) 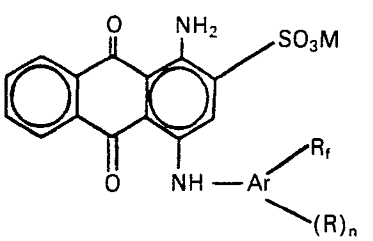

dans laquelle:

M représente un atome d'hydrogène ou un métal alcalin, tel que le sodium, le potassium ou le lithium,

Ar représente un noyau benzénique, un noyau naphtalénique ou un radical de formule:

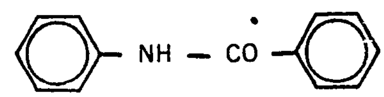

les radicaux ou les substituants qui ont été représentés unis à Ar pouvant être liés séparément aux noyaux benzéniques ou encore être liés en même temps à un des noyaux benzéniques,

$R_f$ représente un radical de formule $-SO_2-CH_2-CH_2-OSO_3M$ où M a la signification précédemment donnée,

R représente, ou chacun des R représente indépendamment l'un de l'autre, un radical alkyle en $C_1$–$C_4$, un radical alcoxy en $C_1$–$C_4$, un atome de brome, un atome de chlore, un radical nitro, un radical trifluorométhyle, un radical alkylamino à alkyle en $C_1$–$C_4$, un radical carboxy ou un radical sulfo, et

n est égal à 0, à 1 ou à 2,

les mêmes symboles pouvant avoir, dans une même molécule, des significations identiques ou des significations différentes les uns par rapport aux autres.

10. Compositions selon l'une quelconque des revendications 1 à 4, caractérisées en ce que le colorant réactif est un colorant répondant à la formule générale F:

(F) 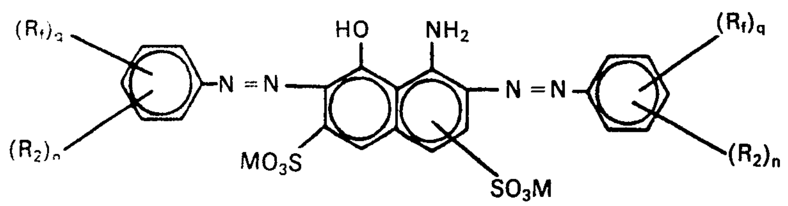

dans laquelle:

M représente un atome d'hydrogène ou un métal alcalin, tel que le sodium, le potassium ou le lithium,

$R_f$ représente un radical de formule $-SO_2-CH_2-CH_2-OSO_3M$ où M a la signification précédemment donnée,

$R_2$ représente un radical alkyle en $C_1$–$C_4$, un radical alcoxy en $C_1$–$C_4$, un atome de brome, un atome de chlore, un radical nitro, un radical trifluorométhyle, un radical carboxy, un radical sulfo, un radical amino, un radical alkylamino à alkyle en $C_1$–$C_4$, un radical alcanoylamino à alkyle en $C_1$–$C_4$, un radical benzoylamino ou un radical benzoylamino porteur d'un atome de chlore, d'un atome de brome, d'un nitro, d'un trifluorométhyle, d'un alkyle en $C_1$–$C_4$ et/ou d'un alcoxy en $C_1$–$C_4$, les deux $R_2$, dans le cas où n est égal à 2, pouvant avoir, l'un par rapport à l'autre, des significations identiques ou des significations différentes, et

q est égal à 0 ou à 1 avec la condition qu'au

moins l'un des indices q, dans une même molécule, soit égal à 1,

les mêmes symboles pouvant avoir, dans une même molécule, des significations identiques ou des significations différentes les uns par rapport aux autres.

11. Compositions selon l'une quelconque des revendications 1 à 4, caractérisées en ce que le colorant réactif est un colorant répondant à la formule générale G:

(G) 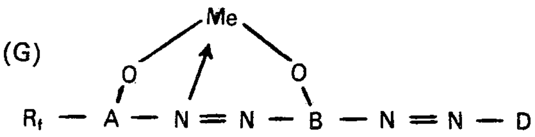

dans laquelle:

$R_f$ représente un radical $-SO_2-CH_2-CH_2-OSO_3M$ où M a la signification indiquée plus haut,

Me représente un atome de cuivre ou de nickel ou l'équivalent d'un atome de cobalt ou de chrome,

A représente un radical répondant à l'une des formules (a) et (b) qui sont représentées et définies ci-dessous,

B représente un radical répondant à l'une des formules (c) et (d) qui sont représentées et définies ci-dessous,

D represente un radical répondant à l'une des formules (e) et (f) qui sont représentées et définies ci-dessous:

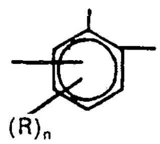 (a)

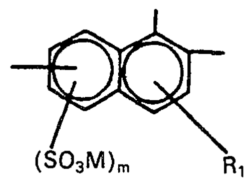 (b)

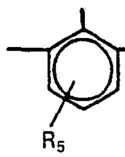 (c)

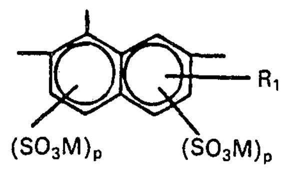 (d)

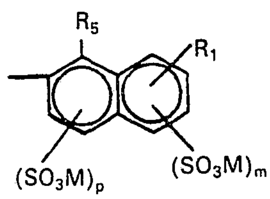

(e)

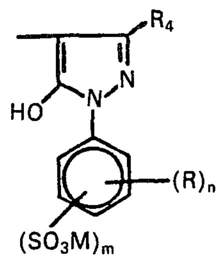 (f)

M représente un atome d'hydrogène ou un métal alcalin, tel que le sodium, le potassium ou le lithium,

R représente, ou chacun des R représente indépendamment l'un de l'autre, un radical alkyle en $C_1$–$C_4$, un radical alcoxy en $C_1$–$C_4$, un atome de brome, un atome de chlore, un radical nitro, un radical trifluorométhyle, un radical alkylamino à alkyle en $C_1$–$C_4$, un radical carboxy ou un radical sulfo,

$R_1$ représente un radical amino, un radical alkylamino à alkyle en $C_1$–$C_4$, un radical alcanoylamino à alkyle en $C_1$–$C_4$, un radical benzoylamino ou un radical benzoylamino porteur d'un atome de chlore, d'un atome de brome, d'un nitro, d'un trifluorométhyle, d'un alkyle en $C_1$–$C_4$ et/ou d'un alcoxy en $C_1$–$C_4$,

$R_4$ représente un radical alkyle en $C_1$–$C_4$, un radical carboxy, un radical alcoxycarbonyle à alkyle en $C_1$–$C_4$ ou un radical carbamoyle,

$R_5$ représente un atome d'hydrogène ou un radical hydroxy,

m est égal à 0, à 1 ou à 2,

n est égal à 0, à 1 ou à 2 et

p est égal à 0 ou à 1,

les mêmes symboles pouvant avoir, dans une même molécule, des significations identiques ou des significations différentes les uns par rapport aux autres.

12. Compositions selon l'une quelconque des revendications 1 à 4, caractérisées en ce que le colorant réactif est un colorant répondant à la formule générale H:

(H) 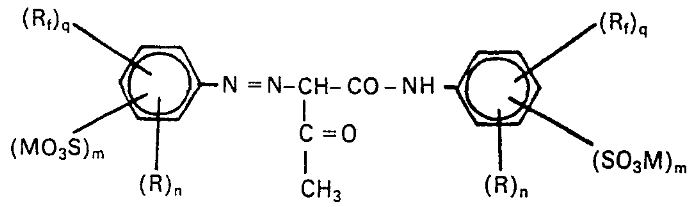

dans laquelle:

M représente un atome d'hydrogène ou un métal alcalin, tel que le sodium, le potassium ou le lithium,

$R_f$ représente un radical de formule $-SO_2-CH_2-CH_2-OSO_3M$ où M a la signification précédemment donnée,

R représente, ou chacun des R représente indépendamment l'un de l'autre, un radical alkyle en $C_1-C_4$, un radical alcoxy en $C_1-C_4$, un atome de brome, un atome de chlore, un radical nitro, un radical trifluorométhyle, un radical alkylamino à alkyle en $C_1-C_4$, un radical carboxy ou un radical sulfo.

m est égal à 0, à 1 ou à 2,

n est égal à 0, à 1 ou à 2 et

q est égal à 0 ou à 1 avec la condition qu'au moins l'un des indices q, dans une même molécule, soit égal à 1, les mêmes symboles pouvant avoir, dans une même molécule, des significations identiques ou des significations différentes les uns par rapport aux autres.

13. Compositions selon l'une quelconque des revendications 1 à 4, caractérisées en ce que le colorant réactif est un colorant répondant à la formule générale J:

(J) 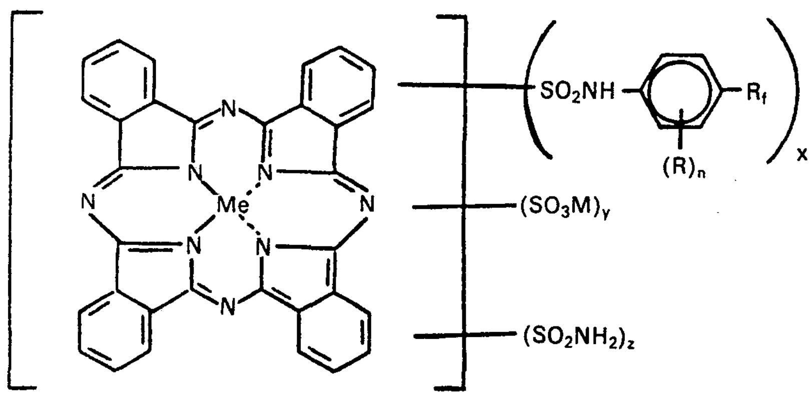

dans laquelle:

M représente un atome d'hydrogène ou un métal alcalin, tel que le sodium, le potassium ou le lithium,

$R_f$ représente un radical de formule $-SO_2-CH_2-CH_2-OSO_3M$ où M a la signification précédemment donnée,

R représente, ou chacun des R représente indépendamment l'un de l'autre, un radical alkyle en $C_1-C_4$, un radical alcoxy en $C_1-C_4$, un atome de brome, un atome de chlore, un radical nitro, un radical trifluorométhyle, un radical alkylamino à alkyle en $C_1-C_4$, un radical carboxy ou un radical sulfo,

Me représente un atome de cuivre ou de nickel ou l'équivalent d'un atome de cobalt ou de chrome,

n est égal à 0, à 1 ou à 2,

x est égal à 1 ou à 2,

y est égal à 1 ou à 2,

z est égal à 0, à 1 ou à 2, et la somme $(x + y + z)$ est égale à 3 ou à 4,

les mêmes symboles pouvant avoir, dans une même molécule, des significations identiques ou des significations différentes les uns par rapport aux autres.

14. Compositions selon l'une quelconque des revendications 1 à 4, caractérisées en ce que le colorant réactif est un colorant répondant à la formule I:

(I) 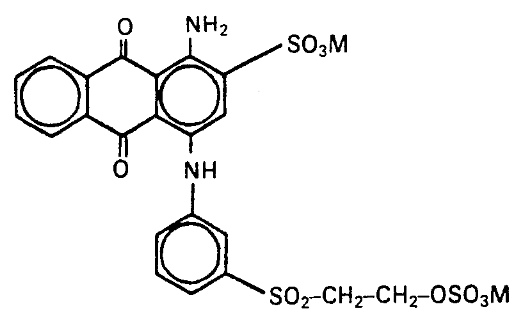

revendications 1 à 4, caractérisées en ce que le colorant réactif est un colorant répondant à l'une des formules II et III:

dans laquelle M a la signification donnée à la revendication 4.

15. Compositions selon l'une quelconque des

(II)

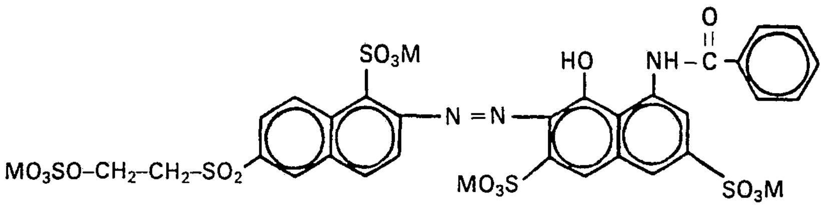

(III)

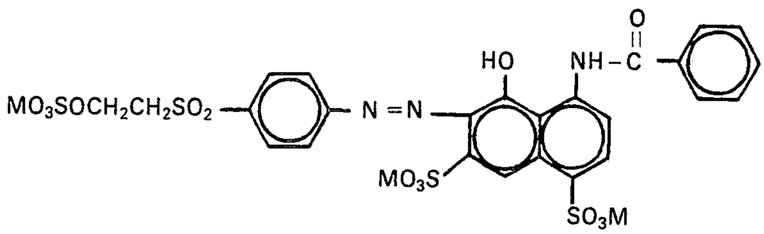

dans lesquelles M a la signification donnée à la revendication 4.

16. Compositions selon l'une quelconque des revendications 1 à 4, caractérisées en ce que le colorant est un colorant répondant à la formule suivante:

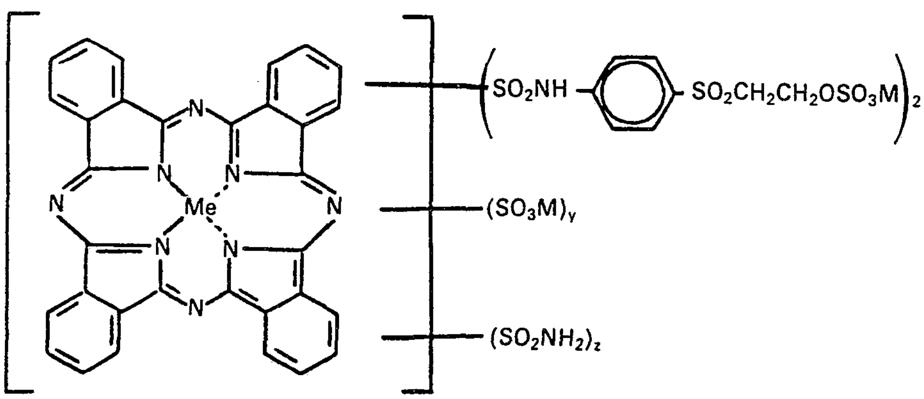

dans laquelle M a la signification donnée à la revendication 4, Me représente un atome de cuivre ou de nickel, y est égal à 2 et z est égal à 0.

17. Compositions selon l'une quelconque des revendications 1 à 4, caractérisées en ce que le colorant réactif est un colorant répondant à l'une des formules V, VIII, IX, X, XII, XIII et XXIII:

(V)

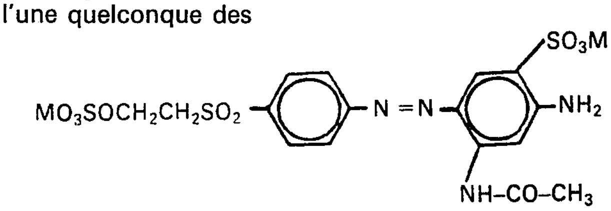

(VIII)

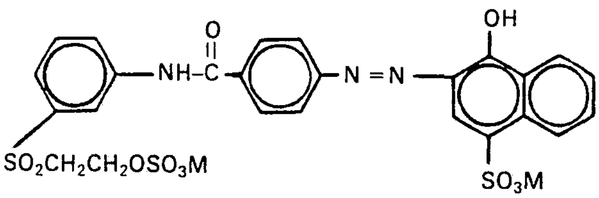

(IX)

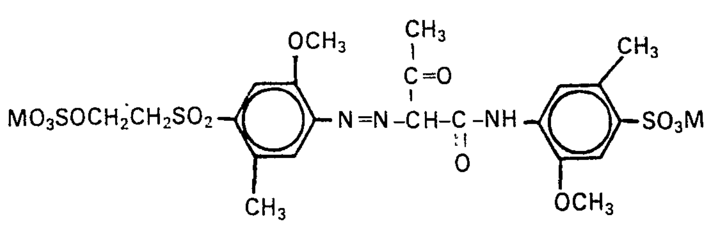

(X)

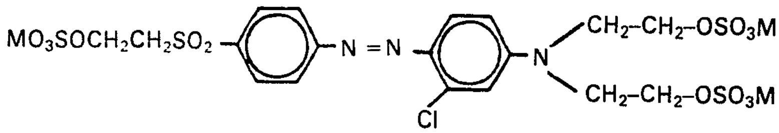

(XII)

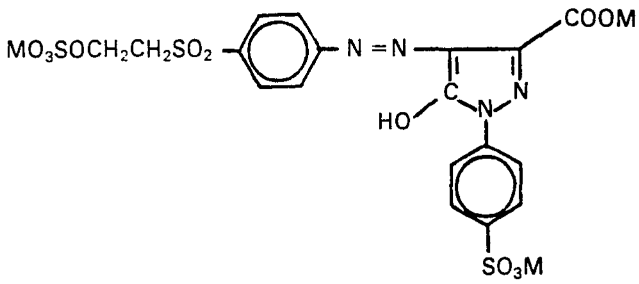

(XIII)

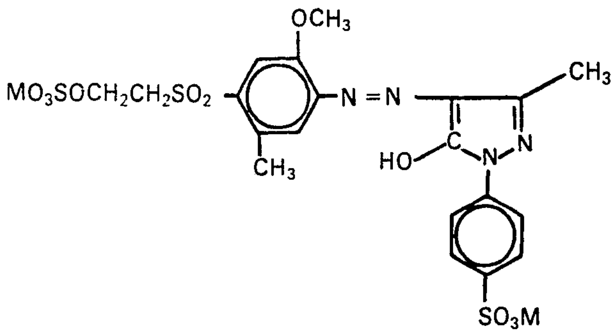

(XXIII)

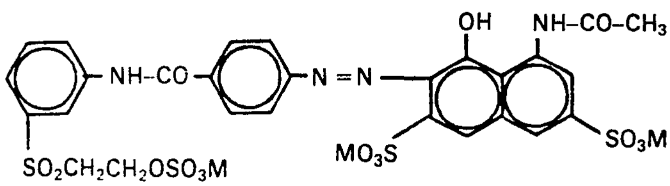

dans lesquelles M a la signification donnée à la revendication 4.

18. Compositions selon l'une quelconque des revendications 1 à 4, caractérisées en ce que le colorant réactif est un colorant répondant à l'une des formules VI, XI, XIV, XVI et XV:

(VI)

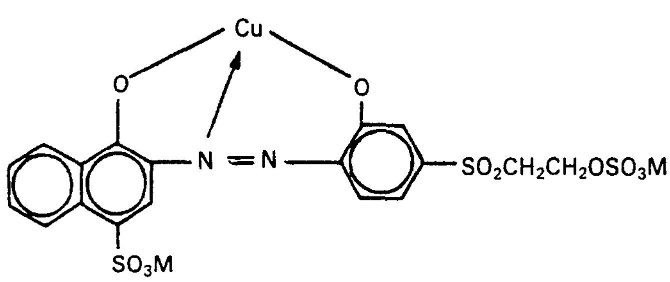

(XI)

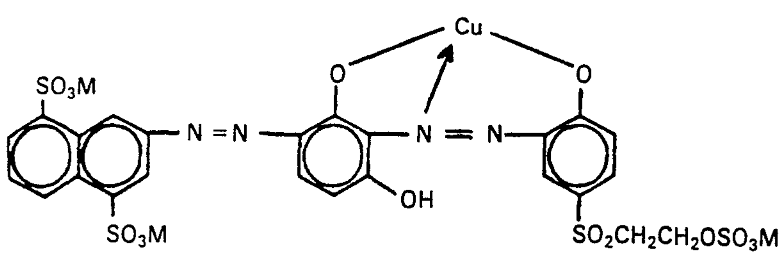

(XIV)

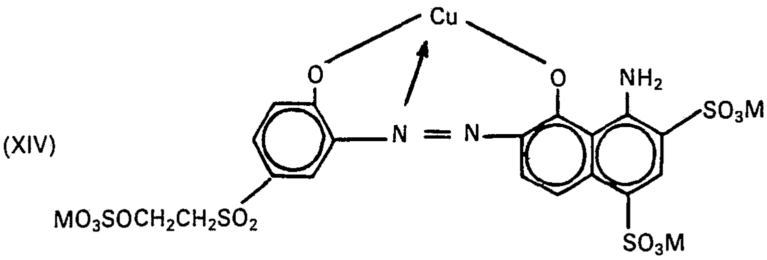

(XVI)

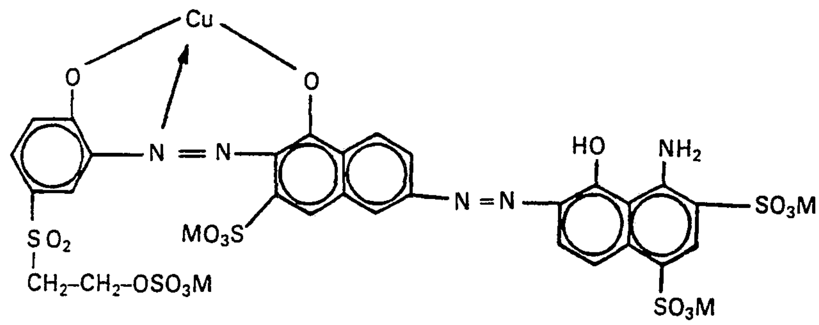

(XV)

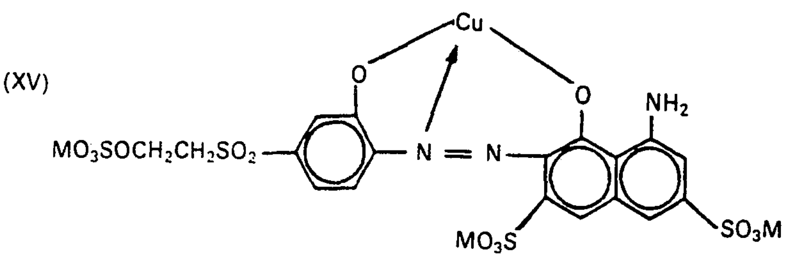

dans lesquelles M a la signification donnée à la revendication 4.

19. Compositions selon l'une quelconque des revendications 1 à 4, caractérisées en ce que le colorant réactif est un colorant répondant à la formule générale suivante:

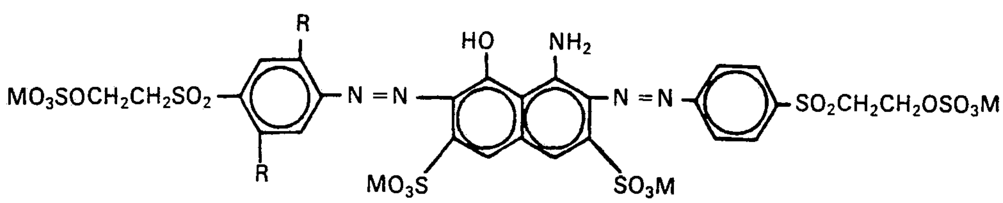

dans laquelle M a la signification donnée à la revendication 4 et les deux symboles R représentent chacun un atome d'hydrogène ou chacun un radical méthoxy.

20. Compositions selon l'une quelconque des revendications 1 à 4, caractérisées en ce que le colorant réactif est un colorant répondant à la formule suivante:

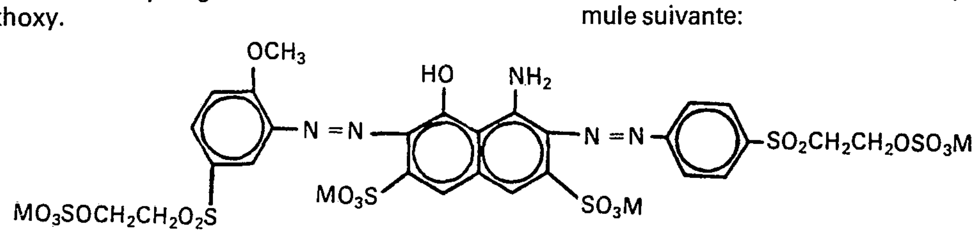

dans laquelle M a la signification donnée à la revendication 4.

21. Compositions selon l'une quelconque des revendications 7, 11, 13 et 16, caractérisées en ce que Me représente un atome de cuivre.

22. Compositions selon l'une quelconque des revendications 1 à 21, caractérisées en ce qu'elles contiennent ou sont constituées de 10 à 20% en poids d'un des colorants réactifs mentionnés, de 0 à 6% en poids d'un des sels minéraux inertes mentionnés et de 75 à 90% en poids d'eau.

23. Compositions selon l'une quelconque des revendications 1 à 21, caractérisées en ce qu'elles contiennent ou sont constituées de 30 à 40% en poids d'un des colorants réactifs mentionnés, de 0 à 6% en poids d'un des sels minéraux inertes mentionnés et de 25 à 70% en poids d'eau.

**Claims**

1. Aqueous, liquid compositions of fibre-reactive dyestuffs, characterized by that they consist essentially of 6 to 45% by weight of a water-soluble dyestuff having from 1 to 3 β-sulfatoethylsulfonyl groups, or a mixture of such dyestuffs, and of 0 to 10% by weight of a water-soluble inert inorganic salt and 45 to 95% by weight of water, and that they have a pH-value between about 2.5 and about 4.5 and are free of buffer substances.

2. Compositions according to claim 1, wherein the inert inorganic salt is an alkali metal chloride or alkali metal sulfate or ammonium chloride or ammonium sulfate, or a mixture of such salts.

3. Compositions according to claim 1 or 2, characterized by that the content of the inert inorganic salt is 0 to 6% by weight.

4. Compositions according to one of claims 1 to 3, wherein the fibre-reactive dyestuff is a dyestuff conforming to the general formula (1)

$$(MO_3S)_k-F-(SO_2-CH_2-CH_2-OSO_3M)_r \qquad (1)$$

in which F is the chromophoric radical of a monoazo, disazo, anthraquinone or phthalocyanine dyestuff or of a copper-, nickel-, chromium- or cobalt metal complex of these dyestuffs, k is an integer from 1 to 4, r denotes an integer from 1 to 3 and M represents a hydrogen atom or the equivalent of a metal, in particular of an alkali metal or alkaline earth metal.

5. Compositions according to claim 4, characterized by that that k is the number 1 and r is the number 1.

6. Compositions according to one of claims 1 to 4, characterized by that the fibre-reactive dyestuff is a dyestuff conforming to the general formula (A)

A 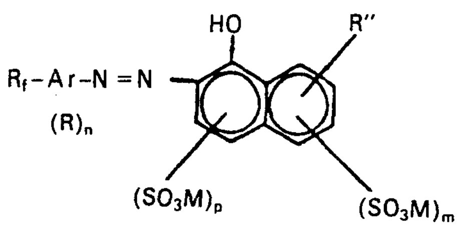

in which:

M is a hydrogen atom or an alkali metal, such as sodium, potassium or lithium;

Ar is a benzene nucleus or a naphthalene nucleus or a radical of the formula

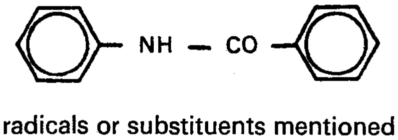

and the radicals or substituents mentioned for Ar can be bonded separately to the benzene nuclei or together to one of the benzene nuclei;

$R_f$ is a group of the formula $-SO_2-CH_2-CH_2-OSO_3M$ in which M has the above-mentioned meaning;

R is each an alkyl group of 1 to 4 C-atoms, an alkoxy group of 1 to 4 C-atoms, a bromine atom, a chlorine atom, a nitro group, a trifluoromethyl group, an alkylamino group having an alkyl radical of 1 to 4 C-atoms, a carboxy group or a sulfo group, and the R's can have meanings which are identical to or different from one another;

R″ is an amino group, an alkyl amino group having an alkyl radical of 1 to 4 C-atoms, an alkanoylamino group having an alkyl radical of 1 to 4 C-atoms, the benzoylamino group or a benzoylamino group substituted by chlorine, bromine, nitro, trifluoromethyl, alkyl of 1 to 4 C-atoms and/or alkoxy of 1 to 4 C-atoms;

m is the number zero, 1 or 2;

n is the number zero, 1 or 2;

p is the number zero or 1,

and the above-mentioned formula moieties can have meanings which are identical to or different from one another.

7. Compositions according to one of claims 1 to 4, characterized by that the fibre-reactive dyestuff is the dyestuff conforming to the general formula (B)

B 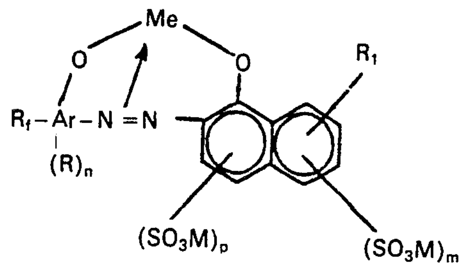

in which:

M is a hydrogen atom or an alkali metal, such as sodium, potassium or lithium;

Ar is a benzene nucleus or a naphthalene nucleus or a radical of the formula

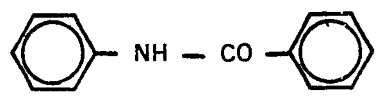

and the radicals or substituents mentioned for Ar can be bonded separately to the benzene nuclei or together to one of the benzene nuclei;

$R_f$ is a group of the formula $-SO_2-CH_2-CH_2-OSO_3M$ in which M has the above-mentioned meaning;

R is each an alkyl group of 1 to 4 C-atoms, an alkoxy group of 1 to 4 C-atoms, a bromine atom, a chlorine atom, a nitro group, a trifluoromethyl group, an alkylamino group having an alkyl radical of 1 to 4 C-atoms, a carboxy group or a sulfo group, and the R's can have meanings which are identical to or different from one another;

$R_1$ is an amino group, an alkyl amino group having an alkyl radical of 1 to 4 C-atoms, an alkanoylamino group having an alkyl radical of 1 to 4 C-atoms, the benzoylamino group or a benzoylamino group substituted by chlorine, bromine, nitro, trifluoromethyl, alkyl of 1 to 4 C-atoms and/or alkoxy of 1 to 4 C-atoms;

Me is a copper- or nickel atom or the equivalent of a cobalt- or chromium atom;

m is the number zero, 1 or 2;

n is the number zero, 1 or 2;

p is the number zero or 1,

and the above-mentioned formula moieties can have meanings which are identical to or different from one another.

8. Compositions according to one of claims 1 to 4, characterized by that the fibre-reactive dyestuff is a dyestuff conforming to the general formula (C) or (D)

(C) 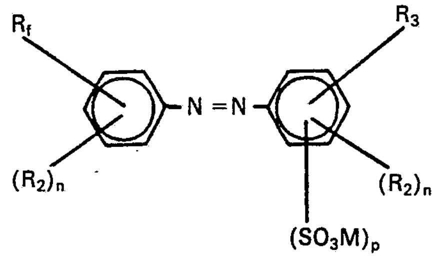

(D) 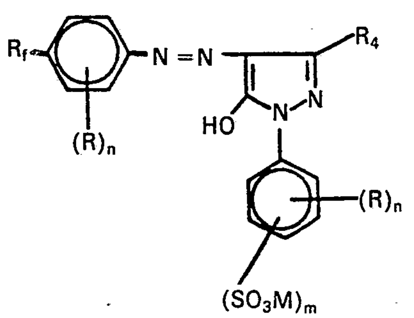

in which:

M is a hydrogen atom or an alkali metal, such as sodium, potassium or lithium;

$R_f$ is a group of the formula $-SO_2-CH_2-CH_2-OSO_3M$ in which M has the above-mentioned meaning;

R is each an alkyl group of 1 to 4 C-atoms, an alkoxy group of 1 to 4 C-atoms, a bromine atom, a chlorine atom, a nitro group, a trifluoromethyl group, an alkylamino group having an alkyl radical of 1 to 4 C-atoms, a carboxy group or a sulfo group, and the R's can have meanings which are identical to or different from one another;

$R_2$ is an alkyl group of 1 to 4 C-atoms, an alkoxy group of 1 to 4 C-atoms, a bromine atom, a chlorine atom, a nitro group, a trifluoromethyl group, a carboxy group, a sulfo group, an amino group, an alkylamino group having an alkyl radical of 1 to 4 C-atoms, an alkanoylamino group having an alkyl radical of 1 to 4 C-atoms, a benzoylamino group or a benzoylamino group substituted by chlorine, bromine, nitro, trifluoromethyl, alkyl of 1 to 4 C-atoms and/or alkoxy of 1 to 4 C-atoms, and both $R_2$ can, if n is equal to 2, have meanings which are identical to or different from one another;

$R_3$ is a hydrogen atom or a radical of the formula

$-NH-CH_2-CH_2-OH$, $-N(CH_2-CH_2-OH)_2$,
$-NH-CH_2-CH_2-O-CO-CH_3$,
$-N(CH_2-CH_2-O-CO-CH_3)_2$,
$-NH-CH_2-CH_2-OSO_3M$,
$-N(CH_2-CH_2-OSO_3M)_2$,
$-NH-CH_2-CH_2-CN$ or $-N(CH_2-CH_2-CN)_2$,
wherein M has the above-mentioned meaning;

$R_4$ is an alkyl group of 1 to 4 C-atoms, a carboxy group, a carboalkoxy group of 1 to 4 C-atoms in the alkyl radical, or a carbamoyl group;

m is the number zero, 1 or 2;

n is the number zero, 1 or 2;

p is the number zero or 1,

and the above-mentioned formula moieties can have meanings which are identical to or different from one another.

9. Compositions according to one of claims 1 to 4, characterized by that the fibre-reactive dyestuff is a dyestuff conforming to the general formula (E)

(E) 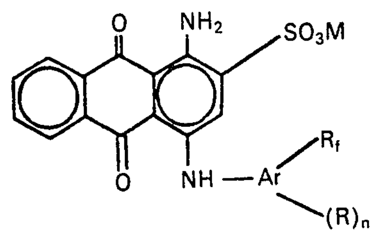

in which:

M is a hydrogen atom or an alkali metal, such as sodium, potassium or lithium;

Ar is a benzene nucleus or a naphthalene nucleus or a radical of the formula

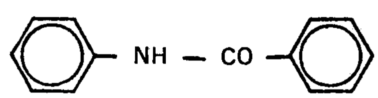

and the radicals or substituents mentioned for Ar can be bonded separately to the benzene nuclei or together to one of the benzene nuclei;

$R_f$ is a group of the formula $-SO_2-CH_2-CH_2-OSO_3M$ in which M has the above-mentioned meaning;

R is each an alkyl group of 1 to 4 C-atoms, an alkoxy group of 1 to 4 C-atoms, a bromine atom, a chlorine atom, a nitro group, a trifluoromethyl group, an alkylamino group having an alkyl radical of 1 to 4 C-atoms, a carboxy group or a sulfo group, and the R's can have meanings which are identical to or different from one another;

n is the number zero, 1 or 2,

and the above-mentioned formula moieties can have meanings which are identical to or different from one another.

10. Compositions according to one of claims 1 to 4, characterized by that the fiber-reactive dyestuff is a dyestuff conforming to the general formula (F)

(F) 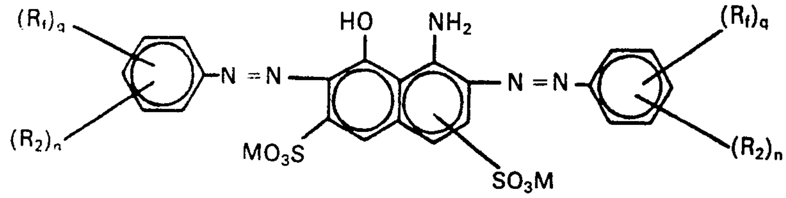

in which:

M is a hydrogen atom or an alkali metal, such as sodium, potassium or lithium;

$R_f$ is a group of the formula $-SO_2-CH_2-CH_2-OSO_3M$ in which M has the above-mentioned meaning;

$R_2$ is analkyl group of 1 to 4 C-atoms, an alkoxy group of 1 to 4 C-atoms, a bromine atom, a chlorine atom, a nitro group, a trifluoromethyl group, a carboxy group, a sulfo group, an amino group, an alkylamino group having an alkyl radical of 1 to 4 C-atoms, an alkanoylamino group having an alkyl radical of 1 to 4 C-atoms, a benzoylamino group or a benzoylamino group substituted by chlorine, bromine, nitro, trifluoromethyl, alkyl of 1 to 4 C-atoms and/or alkoxy of 1 to 4 C-atoms, and both $R_2$ can, if n is equal to 2, have meanings which are identical to or different from one another;

q is the number zero or 1 with the proviso that at least one of the formula members q in each formula moiety denotes the number 1,

and the above-mentioned formula moieties can have meanings which are identical to or different from one another.

11. Compositions according to one of claims 1 to 4, characterized by that the fiber-reactive dyestuff is a dyestuff conforming to the general formula (G)

(G) 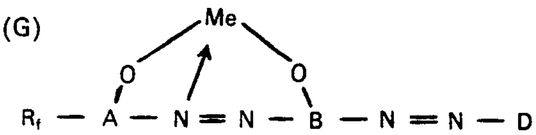

in which:

$R_f$ is a group of the formula $-SO_2-CH_2-CH_2-OSO_3M$ in which M has the meaning mentioned below;

Me is a copper- or nickel-atom or the equivalent of a cobalt- or chromium-atom;

A is a radical of the formula (a) or (b), shown and defined below,

B is a radical of the formula (c) or (d), shown and defined below,

D is a radical of the formula (e) or (f), shown and defined below:

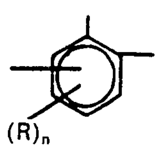 (a)

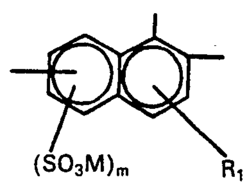 (b)

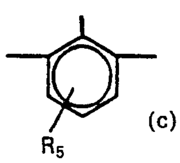 (c)

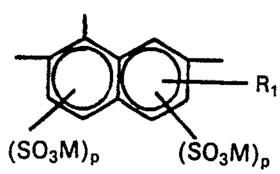 (d)

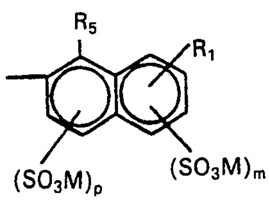

(e)

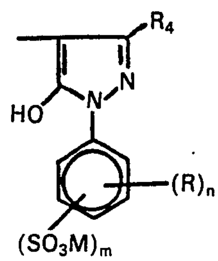 (f)

in which:

M is a hydrogen atom or an alkali metal, such as sodium, potassium or lithium;

R is each an alkyl group of 1 to 4 C-atoms, an alkoxy group of 1 to 4 C-atoms, a bromine atom, a chlorine atom, a nitro group, a trifluoromethyl group, an alkylamino group having an alkyl radical of 1 to 4 C-atoms, a carboxy group or a sulfo group, and the R's can have meanings which are identical to or different from one another;

$R_1$ is an amino group, an alkyl amino group having an alkyl radical of 1 to 4 C-atoms, an alkanoylamino group having an alkyl radical of 1 to 4 C-atoms, the benzoylamino group or a benzoylamino group substituted by chlorine, bromine, nitro, trifluoromethyl, alkyl of 1 to 4 C-atoms and/or alkoxy of 1 to 4 C-atoms;

$R_4$ is an alkyl group of 1 to 4 C-atoms, a carboxy group, a carboalkoxy group of 1 to 4 C-atoms in the alkyl radical, or a carbamoyl group;

$R_5$ is a hydrogen atom or a hydroxy group;

m is the number zero, 1 or 2;

n is the number zero, 1 or 2;

p is the number zero or 1,

and the above-mentioned formula moieties can have meanings which are identical to or different from one another.

12. Compositions according to one of claims 1 to 4, characterized by that the fiber-reactive dyestuff is a dyestuff conforming to the general formula (H)

(H)

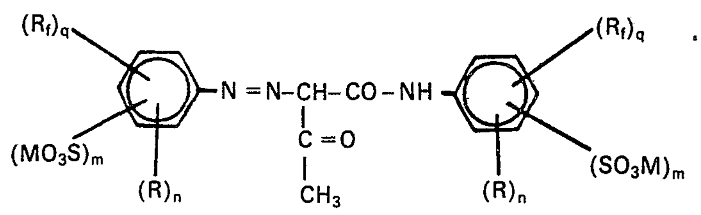

in which:

M is a hydrogen atom or an alkali metal, such as sodium, potassium or lithium;

$R_f$ is a group of the formula $-SO_2-CH_2-CH_2-OSO_3M$ in which M has the above-mentioned meaning;

R is each an alkyl group of 1 to 4 C-atoms, an alkoxy group of 1 to 4 C-atoms, a bromine atom, a chlorine atom, a nitro group, a trifluoromethyl group, an alkylamino group having an alkyl radical of 1 to 4 C-atoms, a carboxy group or a sulfo group, and the R's can have meanings which are identical to or different from one another;

m is the number zero, 1 or 2;

n is the number zero, 1 or 2;

q is the number zero or 1 with the proviso that at least one of the formula member q in each formula moiety denotes the number 1,

and the above-mentioned formula moieties can have meanings which are identical to or different from one another.

13. Compositions according to one of claims 1 to 4, characterized by that the fiber-reactive dyestuff is a dyestuff conforming to the general formula (J)

(J)

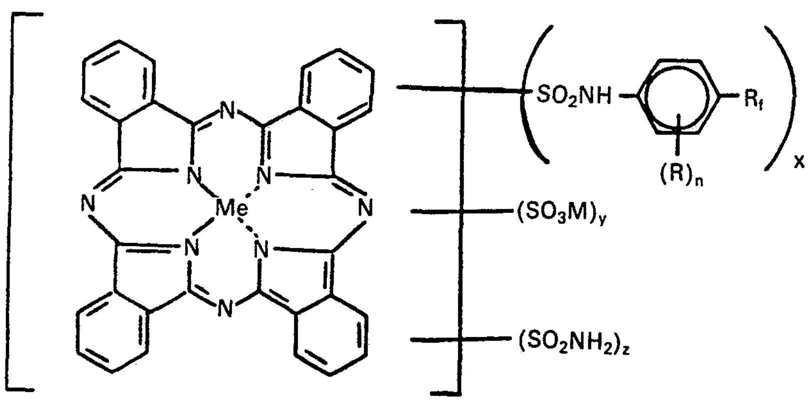

in which:

M is a hydrogen atom or an alkali metal, such as sodium, potassium or lithium;

$R_f$ is a group of the formula $-SO_2-CH_2-CH_2-OSO_3M$ in which M has the above-mentioned meaning;

R is each an alkyl group of 1 to 4 C-atoms, an alkoxy group of 1 to 4 C-atoms, a bromine atom, a chlorine atom, a nitro group, a trifluoromethyl group, an alkylamino group having an alkyl radical of 1 to 4 C-atoms, a carboxy group or a sulfo group, and the R's can have meanings which are identical to or different from one another;

Me is a copper- or nickel-atom or the equivalent of a cobalt- or chromium-atom;

n is the number zero, 1 or 2,

x is the number 1 or 2,

y is the number 1 or 2,

z is the number zero, 1 or 2,

and the sum of (x + y + z) is equal to 3 or 4, and the above-mentioned formula moieties can have meanings which are identical to or different from one another.

14. Compositions according to one of claims 1 to 4, characterized by that the fiber-reactive dyestuff is a dyestuff of the formula (I)

(I)

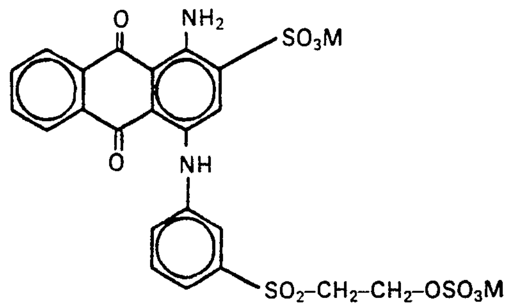

in which M has the meaning mentioned in claim 4.

15. Compositions according to one of claims 1 to 4, characterized by that the fiber-reactive dyestuff is a dyestuff of the formula (II) or (III)

(II)

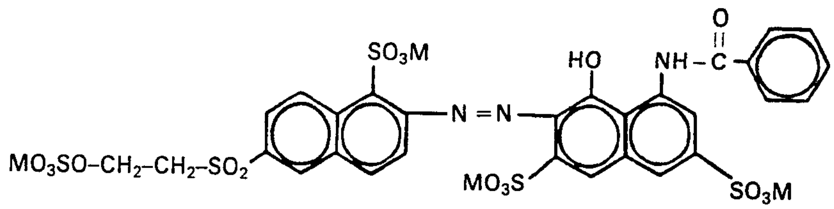

(III)

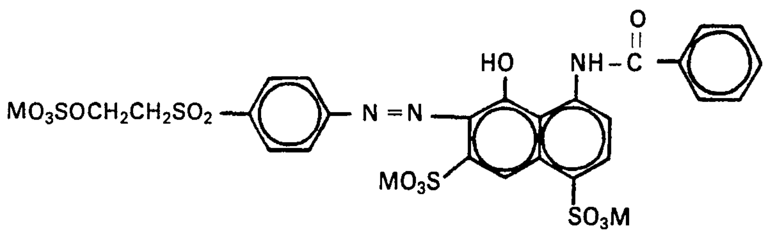

in which M has the meaning mentioned in claim 4.

16. Compositions according to one of claims 1 to 4, characterized by that the dyestuff is a dyestuff of the general formula

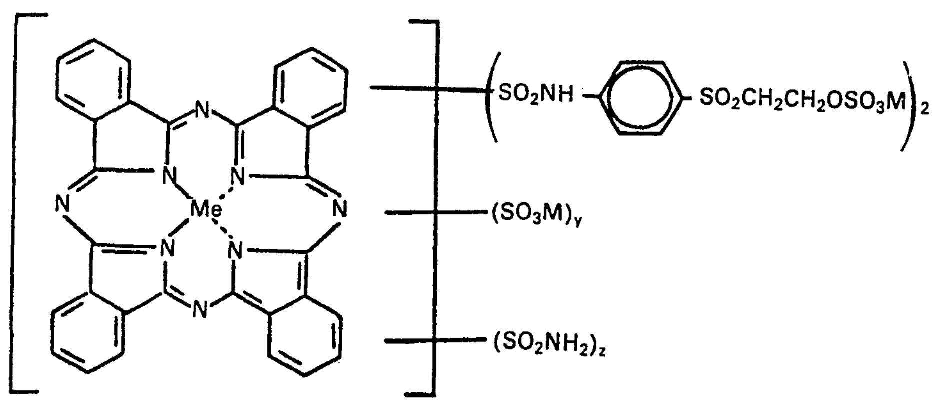

in which M has the meaning mentioned in claim 4, Me is a copper- or nickelatom, y is the number 2, and z represents the number zero.

17. Compositions according to one of claims 1 to 4, characterized by that the fiber-reactive dyestuff is a dyestuff of the formula (V), (VIII), (IX), (X), (XII), (XIII) or (XXIII)

(V)

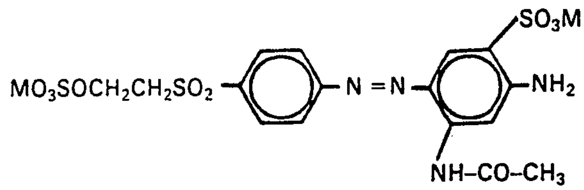

(VIII)

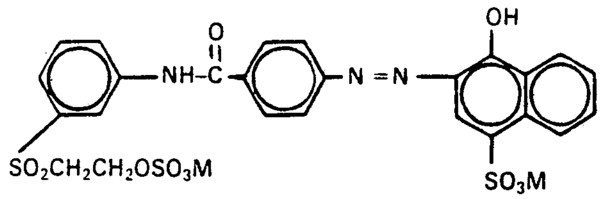

(IX)

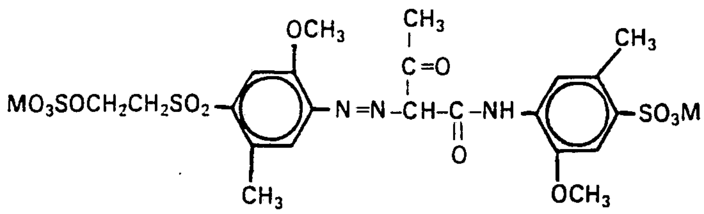

(X)

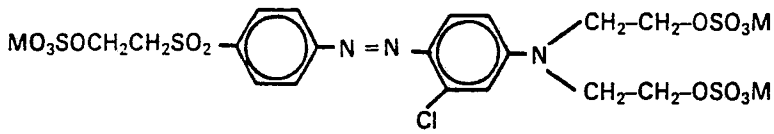

(XII)

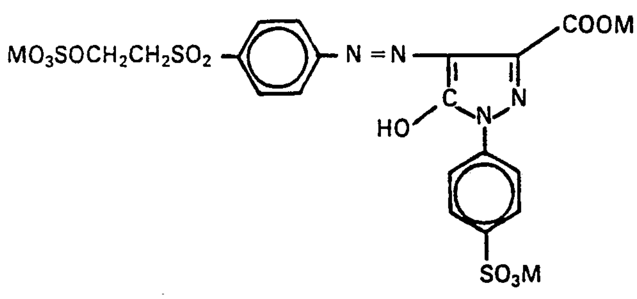

(XIII)

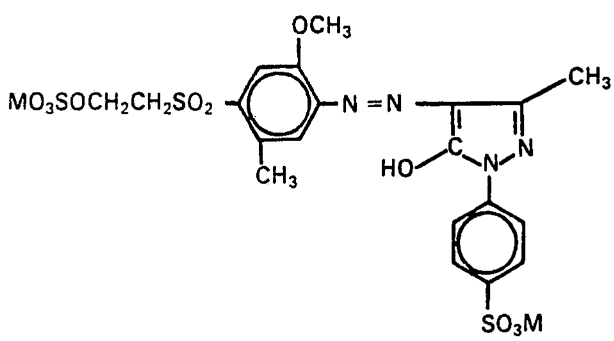

(XXIII)

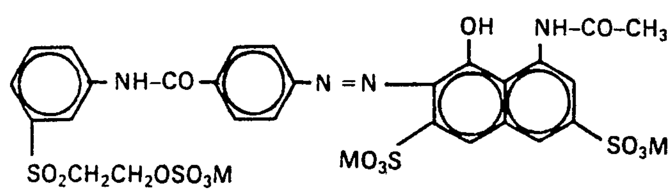

in which M has the meaning mentioned in claim 4.

18. Compositions according to one of claims 1 to 4, characterized by that the fiber-reactive dyestuff is a dyestuff of the formula (VI), (XI), (XIV), (XVI) or (XV)

(VI)

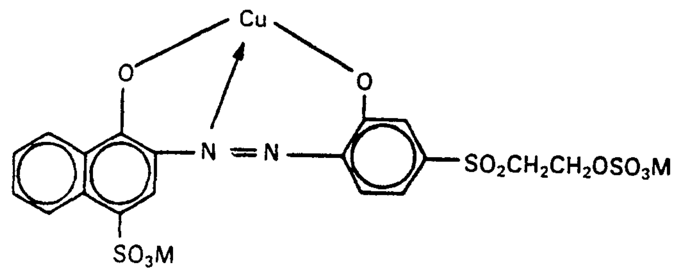

(XI)

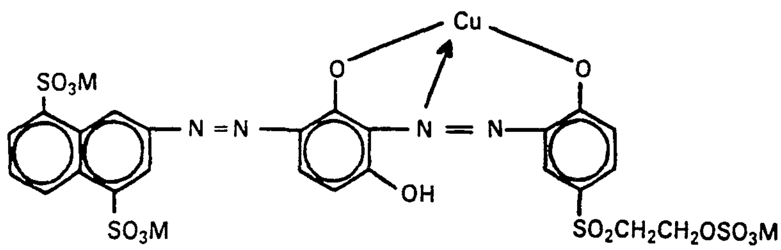

(XIV)

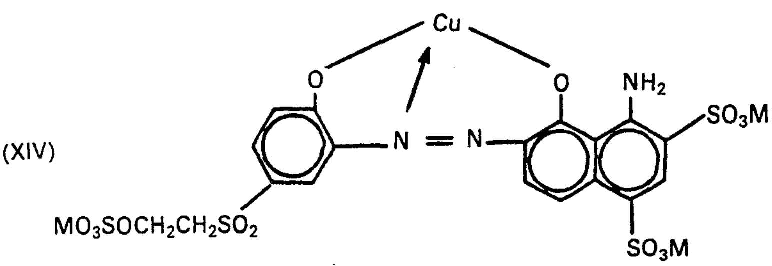

(XVI)

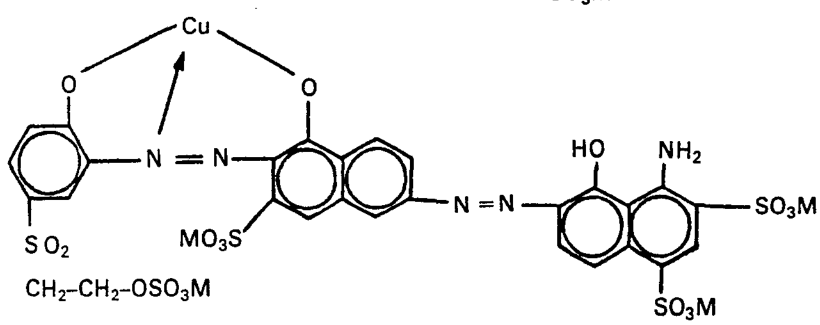

(XV)

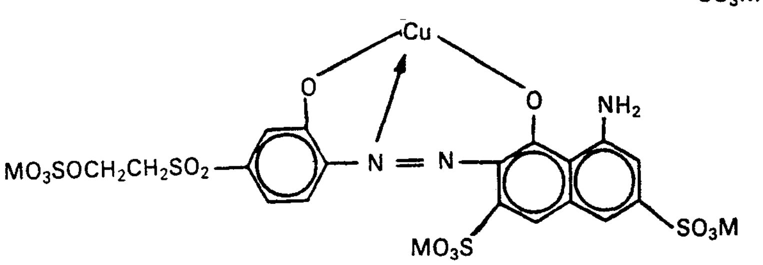

in which M has the meaning mentioned in claim 4.

19. Compositions according to one of claims 1 to 4, characterized by that the dyestuff is a dyestuff of the general formula

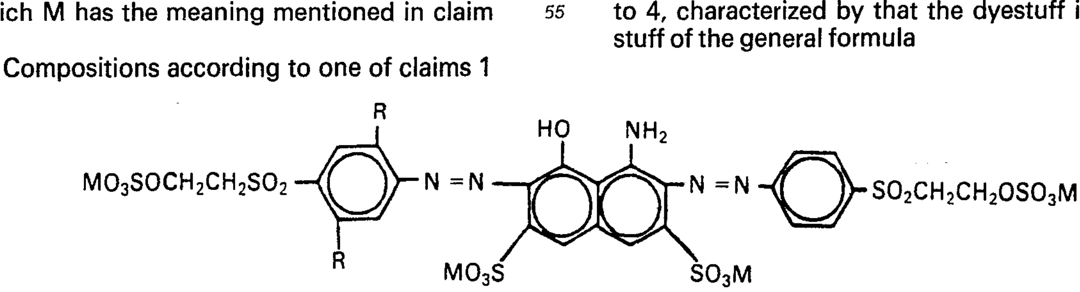

in which M has the meaning mentioned in claim 4 and both R's denote each a hydrogen atom or each a methoxy group.

20. Compositions according to one of claims 1 to 4, characterized by that the fiber-reactive dyestuff is a dyestuff of the general formula

(XXVI) 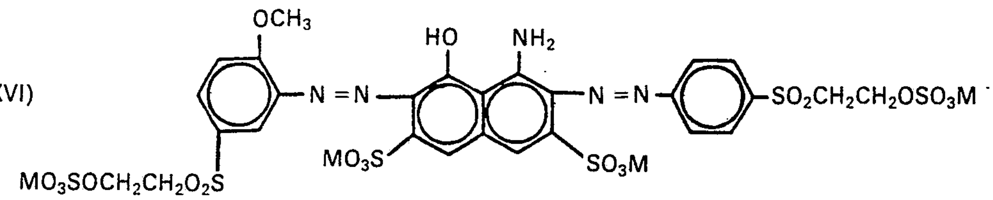

in which M has the meaning mentioned in claim 4.

21. Compositions according to one of claim 7, 11, 13 or 16, characterized by that Me denotes a copper atom.

22. Compositions according to one of claims 1 to 21, characterized by that they contain or consist of 10 to 20% by weight of one of the mentioned fiber-reactive dyestuffs, 0 to 6% by weigth of one of the mentioned inert inorganic salts and 75 to 90% by weight of water.

23. Compositions according to one of claims 1 to 21, characterized by that they contain or consist or 30 to 40% by weight of one of the mentioned fiber-reactive dyestuffs, 0 to 6% by weight of one of the mentioned inert inorganic salts and 25 to 70% by weight of water.